# EUROPEAN PATENT APPLICATION

(11) **EP 1 686 330 A2**
(43) Date of publication of application: **02.08.2006**
(21) Application number: 06001722.5
(22) Date of filing: 27.01.2006
(51) Int. Cl.: F25B 1/10, F25B 5/02, F25B 9/00, F25D 11/02, F25B 31/02

(54) **Refrigerating device, refrigerator, compressor, and gas-liquid separator**

(30) Priority: 31.01.2005 JP 2005024211; 28.02.2005 JP 2005054708; 30.03.2005 JP 2005100182; 30.03.2005 JP 2005100183; 30.03.2005 JP 2005100185
(71) Applicant: SANYO ELECTRIC CO., LTD., Moriguchi-shi, Osaka (JP)
(72) Inventor: Imai, Satoshi, Ota-shi Gunma 373-0038 (JP); Itsuki, Hiroyuki, Ora-gun Gunma 370-0533 (JP); Mukaiyama, Hiroshi, Ora-gun Gunma 370-0725 (JP); Otake, Masahisa, Ora-gun Gunma 370-0615 (JP); Nagae, Etsushi, Ota-shi Gunma 373-0813 (JP); Nakazaki, Itsuo, Ota-shi Gunma 373-0861 (JP); Sugawara, Akira, Kumagaya-shi Saitama 360-0161 (JP)
(74) Representative: Glawe, Delfs, Moll

(57) **Abstract**

An object is to provide a refrigerating device capable of realizing a high-efficiency operation in a case where there is disposed, in a refrigerating cycle, a compressor (1) having: a plurality of heat sinks (57,58) which function in different temperature zones; and an intermediate-pressure portion. The refrigerating device comprises: the compressor (1) having the intermediate-pressure portion; and a radiator (2) connected to a discharge side of the compressor (1), a refrigerant pipe on an outlet side of the radiator (2) is branched (9A), one of the branched refrigerant pipes is provided with a first heat absorbing unit (10) including a first pressure reducing section (65) and a first heat sink (57), and the other refrigerant pipe is provided with a second heat absorbing unit (11) including a second pressure reducing section (66) and a second heat sink (58). The one refrigerant pipe (6) is connected to the intermediate-pressure portion of the compressor, and the other refrigerant pipe is connected to a suction portion of the compressor on a low-pressure side of the intermediate-pressure portion.

## Description

### BACKGROUND OF THE INVENTION

The present invention relates to a refrigerating device provided with a plurality of heat sinks having different evaporation temperatures, and a refrigerator provided with this refrigerating device.

Moreover, the present invention relates to a refrigerating device provided with compression means for compressing a refrigerant in multiple stages, and a refrigerator, further to a compressor which is applicable to such refrigerating device.

Furthermore, the present invention relates to a refrigerating device provided with means for adsorbing a water content from a refrigerant, a refrigerator, and a gas-liquid separator which is disposed in a refrigerating cycle and which performs gas-liquid separation of a gasliquid mixed refrigerant.

In general, a refrigerating device is known which includes a plurality of heat sinks and in which these heat sinks are operated in different temperature zones to thereby achieve a high-efficiency operation with respect to a plurality of cooling loads at different temperatures.

As one example of such refrigerating device, in Japanese Patent Application Laid-Open No. 2000-230767, a refrigerator is disclosed in which a compressor and a condenser are combined and in which two heat sinks are connected in parallel to each other and which switches these heat sinks to cool a freezing room and a refrigerating room independently of each other.

Additionally, in this type of refrigerating device, there is sometimes applied a compressor having an intermediate-pressure portion, for example, a compressor having a multistage compression mechanism.

In a case where the compressor having such intermediate-pressure portion is applied to the refrigerating device or the refrigerator as described above, when the refrigerating cycle suitable for use in the intermediate-pressure portion is constructed, it is sometimes possible to realize the refrigerating device which can be operated with a high efficiency.

Moreover, in recent years, it has been demanded that energy be largely saved in a freezer/refrigerator provided with the refrigerating room and the freezing room. For example, in Japanese Patent Application Laid-Open No. 11-223397, in order to realize such energy saving, there is proposed a freezer/refrigerator provided with a two-stage compression refrigerating cycle constituted of: a compressor including a front-stage compression element and a rear-stage compression element; a condenser; first expansion means; an evaporator for the refrigerating room; second expansion means; and an evaporator for the freezing room.

However, the above-described constitution has a problem that one of the freezing room and the refrigerating room is brought into shortage or excess of a refrigerating capability in a case where the cooling loads of the rooms are unbalanced.

To solve such problem, in Japanese Patent Application Laid-Open No. 2001-108345, there is proposed a two-stage compression freezing and refrigerating storage including: a two-stage compressor; an expansion device for an intermediate pressure; a heat sink for the intermediate pressure; an expansion device for a low pressure; a heat sink for the low pressure and the like. Between front-stage and rear-stage sides of the two-stage compressor, there is connected a refrigerant pipe which connects the expansion device for the intermediate pressure to the heat sink for the intermediate pressure.

In addition, in the two-stage compression freezing and refrigerating storage constituted as described above, during a refrigerating operation to stop a cooling function in the heat sink for the low pressure and allow the heat sink for the intermediate pressure to function, a front-stage compression chamber of the two-stage compressor is substantially brought into a vacuum state. Therefore, a large amount of oil flows into the compression chamber to cause liquid compression, and a compressor efficiency sometimes largely drops.

Moreover, in general, in the refrigerating device having the refrigerating cycle provided with the compressor and the like, the inside of the pipe is sometimes frozen by the water content mixed in the refrigerating cycle, and accordingly reliability of the refrigerating cycle sometimes degrades. As to means for preventing the above-described freezing in such refrigerating device, it is known that a drier as water content removing means is disposed in the refrigerating cycle.

In Japanese Patent Application Laid-Open No. 11-21548, it is described that there is disposed the drier filled with zeolite or the like for removing the water content mixed in a refrigerant between an condenser outlet side and an expansion valve inlet side which are high-pressure sides of the refrigerating cycle in the refrigerating device provided with the compressor, the condenser, the expansion valve, the evaporator and the like.

In addition, in this type of refrigerating device, there is a case where carbon dioxide or the like is used as the refrigerant. In this case, for example, the high-pressure side is sometimes operated under a supercritical pressure. In the refrigerating device in which such carbon dioxide refrigerant is used, the high-pressure side of the refrigerating cycle has higher temperature and pressure as compared with a refrigerating device in which hydrofluorocarbon (HFC) or the like is used as the refrigerant. Therefore, in a case where the drier is disposed on the high-pressure side of the refrigerating cycle as described above, there is a possibility that a drying agent charged in the drier is crushed.

### SUMMARY OF THE INVENTION

An object of the present invention is to provide a refrigerating device capable of realizing a higher-efficiency operation in any temperature zone and a refrigerator provided with this refrigerating device in a case where there is disposed, in a refrigerating cycle, a compressor having: a plurality of heat sinks functioning in different temperature zones; and an intermediate-pressure portion.

In a first aspect of the present invention, a refrigerating device comprises: a compressor having an intermediate-pressure portion; and a radiator connected to a discharge side of the compressor, a refrigerant pipe on an outlet side of the radiator being branched, one of the branched refrigerant pipes being provided with first heat absorbing means including first pressure reducing means and a first heat sink, the other branched refrigerant pipe being provided with second heat absorbing means including second pressure reducing means and a second heat sink, wherein the one refrigerant pipe is connected to the intermediate-pressure portion of the compressor, and the other refrigerant pipe is connected to a suction portion of the compressor on a low-pressure side of the intermediate-pressure portion.

In a second aspect of the present invention, the refrigerating device of the first aspect of the present invention, further comprises: a heat exchanger via which heat is exchangeable between a refrigerant discharged from the first heat sink and a refrigerant which is discharged from the radiator and which is to be branched.

In a third aspect of the present invention, in the refrigerating device of the first or second aspect of the present invention, the first heat absorbing means and the second heat absorbing means function in different temperature zones.

In a fourth aspect of the present invention, in the refrigerating device of the third aspect of the present invention, the second heat absorbing means functions in a temperature zone which is lower than that of the first heat absorbing means.

In a fifth aspect of the present invention, a refrigerator comprises: the refrigerating device of the first to fourth aspects of the present invention.

In a sixth aspect of the present invention, the refrigerator of the fifth aspect of the present invention further comprises: a refrigerating room; and a freezing room operated at a temperature which is lower than that of the refrigerating room, the refrigerating room is cooled by the first heat absorbing means, and the freezing room is cooled by the second heat absorbing means.

In a seventh aspect of the present invention, in the refrigerating device of the first to fourth aspects of the present invention, and the refrigerator of the fifth or sixth aspect of the present invention, carbon dioxide is used as a refrigerant.

In the first to seventh aspects of the present invention, there is disposed the heat absorbing means which functions in the different temperature zones. Accordingly, there is provided the refrigerating device capable of operating with a high efficiency, and the refrigerator capable of operating with the high efficiency.

Moreover, an object of the present invention is to provide: a refrigerating device and a refrigerator which are provided with a plurality of heat sinks operating in different temperature zones and which are capable of inhibiting degradation of a compressor efficiency even in a case where a refrigerant pipe extended from one heat sink is connected to an intermediate-pressure portion of a compressor; and the compressor which is applicable to these devices.

In an eighth aspect of the present invention, in a compressor comprising: an electromotive element; and a compression chamber which is driven by the electromotive element to compress a fluid, the electromotive element and the compression chamber being disposed in a sealed container, the compression chamber includes: an introducing port for introducing the fluid into the compression chamber; and first and second discharge ports for discharging the compressed fluid, the first discharge port is provided with a first discharge valve which is opened in a case where the fluid compressed in the compression chamber reaches a first pressure, and the second discharge port is provided with a second discharge valve which is opened at a second pressure which is higher than the first pressure.

In a ninth aspect of the present invention, in the compressor of the eighth aspect of the present invention, the fluid is an oil-containing refrigerant.

In a tenth aspect of the present invention, in the compressor of any one of the eighth and ninth aspects of the present invention, the compression element is constituted of: a front-stage compression element; and a rear-stage compression element which further compresses the refrigerant compressed by the front-stage compression element. The compression chamber of the front-stage compression element is provided with the introducing port, the first discharge port, the first discharge valve, the second discharge port, and the second discharge valve, and the second discharge valve is opened at a pressure which is higher than that of the refrigerant discharged from the rear-stage compression element.

In an eleventh aspect of the present invention, in the compressor of the tenth aspect of the present invention, the second discharge valve is brought into contact with the refrigerant in the compression chamber and the refrigerant discharged from the rear-stage compression element.

In a twelfth aspect of the present invention, a refrigerating device comprises: the compressor of the eighth aspect of the present invention; a radiator connected to a discharge side of the compressor; first heat absorbing means connected to one of branched refrigerant pipes on an outlet side of the radiator and including first pressure reducing means and a first heat sink; and second heat absorbing means connected to the other branched refrigerant pipe and including second pressure reducing means and a second heat sink, the one refrigerant pipe being connected to an intermediate-pressure portion of the compressor, the other refrigerant pipe being connected to a suction port of the compressor on a low-pressure side of the intermediate-pressure portion.

In a 13th aspect of the present invention, in the refrigerating device of the twelfth aspect of the present invention, a high-pressure side of a refrigerating cycle is operated in a supercritical state.

In a 14th aspect of the present invention, a refrigerator comprises: the refrigerating device of any one of the twelfth and 13th aspects of the present invention.

According to the eighth to fourteenth aspects of the present invention, there are provided: the refrigerating device and the refrigerator which are provided with the plurality of heat sinks operating in the different temperature zones and which are capable of inhibiting the degradation of the compressor efficiency even in the case where the refrigerant pipe extended from one heat sink is connected to the intermediate-pressure portion of the compressor; and the compressor which is applicable to these devices.

In a 15th aspect of the present invention, a refrigerating device comprises: compression means including a front-stage compression element and a rear-stage compression element; a radiator connected to a discharge side of the compression means; first heat absorbing means connected to one of branched refrigerant pipes on an outlet side of the radiator and including first pressure reducing means and a first heat sink; and second heat absorbing means connected to the other branched refrigerant pipe and including second pressure reducing means and a second heat sink; changeover means for selecting circulation of a refrigerant to the first heat absorbing means and the second heat absorbing means; and control means for controlling a compressing operation of the compression means based on information of the changeover means. The refrigerant pipe on the outlet side of the first heat absorbing means is connected between the discharge side of the front-stage compression element and a suction port of the rear-stage compression element. The refrigerant pipe on the outlet side of the second heat absorbing means is connected to a suction port of the front-stage compression element. The control means stops the compressing operation of the front-stage compression element in a case where the refrigerant is circulated in the first heat absorbing means and the circulation of the refrigerant to the second heat absorbing means is interrupted.

In a 16th aspect of the present invention, in the refrigerating device of the 15th aspect of the present invention, the compression means is constituted of two compressors, one of the two compressors is operated as the front-stage compression element, the other compressor is operated as the rear-stage compression element, and the control means stops the operation of the one compressor in a case where the refrigerant is circulated in the first heat absorbing means and the circulation of the refrigerant to the second heat absorbing means is interrupted.

In a 17th aspect of the present invention, in the refrigerating device of the 15th aspect, the compression means contains the front-stage compression element and the rear-stage compression element in one sealed container, each of the compression elements is constituted of a rotary multistage compressor including a vane and a roller and operating via the same rotation shaft, the multistage compressor includes contact prevention means for preventing the vane of the front-stage compression element from being brought into contact with the roller, and the control means operates the contact prevention means to prevent the vane of the front-stage compression element from being brought into contact with the roller in a case where the refrigerant is circulated in the first heat absorbing means and the circulation of the refrigerant to the second heat absorbing means is interrupted.

In an 18th aspect of the present invention, in the refrigerating device of the 15th aspect of the present invention, the compression means contains the front-stage compression element and the rear-stage compression element in one sealed container, the front-stage compression element operates via a first rotation shaft, the rear-stage compression element operates via a second rotation shaft, the first rotation shaft is attached to driving means, the first rotation shaft is connected to the second rotation shaft via a clutch mechanism, and the control means disconnects the second rotation shaft from the first rotation shaft via the clutch mechanism in a case where the refrigerant is circulated in the first heat absorbing means and the circulation of the refrigerant to the second heat absorbing means is interrupted.

In a 19th aspect of the present invention, in the refrigerating device of any one of 15th to 18th aspects of the present invention, carbon dioxide is used as the refrigerant.

In a 20th aspect of the present invention, in the refrigerating device of any one of the 15th to 19th aspects of the present invention, a high-pressure side of a refrigerating cycle is operated in a supercritical state.

In a 21st aspect of the present invention, a refrigerator comprises: the refrigerating device of any one of the 15th to 20th aspects of the present invention.

In a 22nd aspect of the present invention, a compressor comprises: a vane; a roller; and contact prevention means for preventing the vane from being brought into contact with the roller.

In a 23rd aspect of the present invention, in the compressor of the 22nd aspect of the present invention, the contact prevention means includes: a magnet attached to the vane; and an electromagnet capable of generating a magnetic force which reacts against the magnet or which attracts the magnet.

In a 24th aspect of the present invention, in the compressor of the 23rd aspect of the present invention, the magnetic force is generated so that the electromagnet reacts against the magnet in a case where a refrigerant compressing operation is performed, and the magnetic force is generated so that the electromagnet attracts the magnet in a case where the refrigerant compressing operation is stopped.

In a 25th aspect of the present invention, a compressor contains a front-stage compression element and a rear-stage compression element in one sealed container, the front-stage compression element operates via a first rotation shaft, the rear-stage compression element operates via a second rotation shaft, the first rotation shaft is attached to driving means, and the first rotation shaft is connected to the second rotation shaft via a clutch mechanism.

In a 26th aspect of the present invention, in the compressor of the 25th aspect of the present invention, the clutch mechanism disconnects the second rotation shaft from the first rotation shaft in a case where a compressing operation of the front-stage compression element is stopped, and a compressing operation of the rear-stage compression element is performed.

According to the 15th to 26th aspects of the present invention, there are provided: the refrigerating device and the refrigerator which are provided with the plurality of heat sinks operating in the different temperature zones and which are capable of inhibiting the degradation of the compressor efficiency even in the case where the refrigerant pipe extended from one heat sink is connected to the intermediate-pressure portion of the compressor; and the compressor which is applicable to these devices.

Furthermore, an object of the present invention is to provide: a refrigerating device and a refrigerator which are capable of inhibiting a drying agent from being crushed even in a case where carbon dioxide or the like is used as a refrigerant; and a gas-liquid separator disposed in a refrigerating cycle.

In a 27th aspect of the present invention, in a refrigerating device comprising a refrigerating cycle including: a compressor; a radiator connected to a discharge side of the compressor; first pressure reducing means connected to an outlet side of the radiator; second pressure reducing means disposed in series to the first pressure reducing means; and a heat sink connected to an outlet side of the second pressure reducing means, adsorbing means for adsorbing a water content from a refrigerant is disposed between the outlet side of the first pressure reducing means and an inlet side of the second pressure reducing means.

In a 28th aspect of the present invention, a gasliquid separator comprises: a container into which a mixed refrigerant of a gas and a liquid is introduced and in which the refrigerant is separated into the gas and the liquid; an introducing tube for introducing the refrigerant into the container; a first outlet tube out of which the gas refrigerant separated in the container flows; and a second outlet tube out of which the liquid refrigerant separated in the container flows. The container is provided with an adsorbing section for adsorbing a water content from the refrigerant.

In a 29th aspect of the present invention, in a refrigerating device comprising a refrigerating cycle including: a compressor; a radiator connected to a discharge side of the compressor; first pressure reducing means connected to an outlet side of the radiator; second pressure reducing means disposed in series to the first pressure reducing means; and a heat sink connected to an outlet side of the second pressure reducing means, the gasliquid separator according to claim 28 is disposed between an outlet side of the first pressure reducing means and an inlet side of the second pressure reducing means.

In a 30th aspect of the present invention, in the refrigerating device of the 29th aspect of the present invention, the compressor has an intermediate-pressure portion, and the first outlet tube of the gas-liquid separator is connected to the intermediate-pressure portion.

In a 31st aspect of the present invention, in the refrigerating device of any one of the 27th, 29th, and 30th aspects of the present invention, a high-pressure part of the refrigerating cycle is operated at a supercritical pressure.

In a 32nd aspect of the present invention, in the refrigerating device of any one of the 27th, 29th, 30th, and 31st aspects of the present invention, carbon dioxide is used as the refrigerant.

In a 33rd aspect of the present invention, a refrigerator comprises: the refrigerating device of any one of the 27th, 29th, 30th, 31st, and 32nd aspects of the present invention.

According to the 27th to 33rd aspects of the present invention, there are provided: the refrigerating device and the refrigerator which are capable of inhibiting the drying agent from being crushed even in a case where carbon dioxide or the like is used as the refrigerant; the refrigerating device and the refrigerator whose performances can be improved even in a case where there are a large amount of gas-phase components which do not contribute to heat exchange in the heat sink; and the gasliquid separator disposed in the refrigerating cycle.

### BRIEF DESCRIPTION OF THE DRAWINGS

FIG. 1 is a refrigerant circuit diagram showing a refrigerating device in Embodiment 1 of the present invention;
FIG. 2 is an enthalpy-pressure chart of a refrigerating cycle in the refrigerating device of Embodiment 1 of the present invention;
FIG. 3 is a schematic constitution diagram showing an application example of the refrigerating device to a refrigerator in Embodiment 1 of the present invention;
FIG. 4 is a refrigerant circuit diagram showing a refrigerating device in Embodiment 2 of present invention;
FIG. 5 is a refrigerant circuit diagram showing a refrigerating device in Embodiment 3 of the present invention;
FIG. 6 is a schematic sectional view of a compressor in Embodiment 3 of the present invention;
FIG. 7 is a plan view including a cylinder of a first-stage compressing section of the compressor in Embodiment 3 of the present invention;
FIG. 8 is a schematic constitution diagram showing an application example of the refrigerating device to a refrigerator in Embodiment 3 of the present invention;
FIG. 9 is a refrigerant circuit diagram showing the refrigerating device in Embodiment 4 of the present invention;
FIG. 10 is a schematic constitution diagram showing an application example of the refrigerating device to a refrigerator in Embodiment 4 of the present invention;
FIG. 11 is a refrigerant circuit diagram showing the refrigerating device in Embodiment 5 of the present invention;
FIG. 12 is a schematic sectional view of a compressor in Embodiment 5 of the present invention;
FIG. 13 is a schematic diagram showing a compression mechanism of the compressor in Embodiment 5 of the present invention;
FIG. 14 is a schematic diagram showing the compression mechanism of the compressor in Embodiment 5 of the present invention;
FIG. 15 is a refrigerant circuit diagram showing the refrigerating device in Embodiment 6 of the present invention;
FIG. 16 is a schematic sectional view of a compressor in Embodiment 6 of the present invention;
FIG. 17 is a schematic sectional view of the compressor in Embodiment 6 of the present invention;

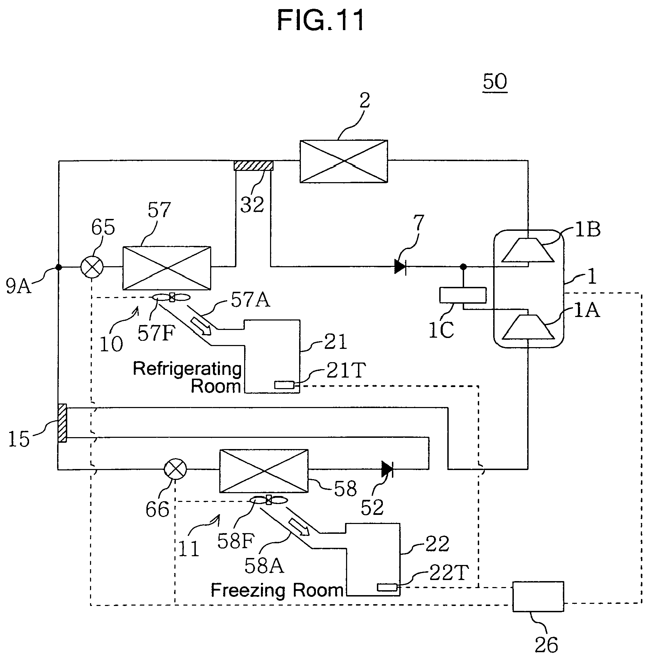

FIG. 11 is a refrigerant circuit diagram showing the refrigerating device in Embodiment 5 of the present invention;

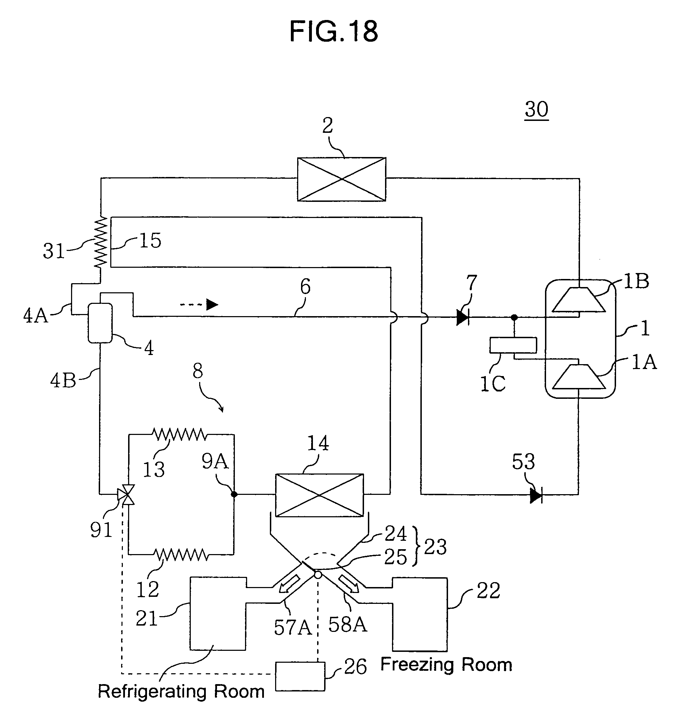

FIG. 18 is a refrigerator circuit diagram showing a refrigerating device in Embodiment 7 of the present invention;

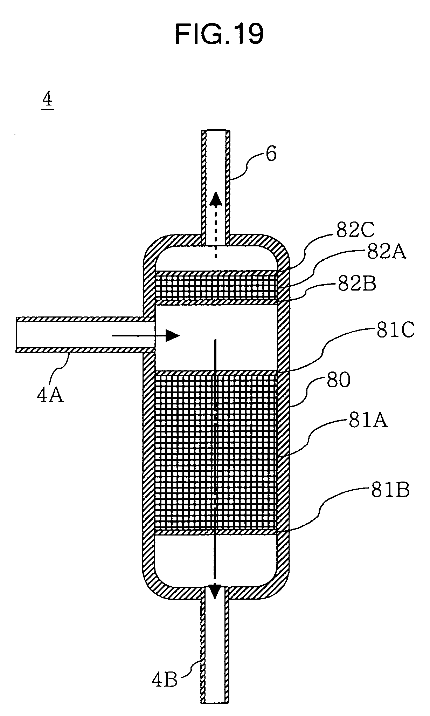

FIG. 19 is a schematic sectional view showing one example of a gas-liquid separator of the present invention;

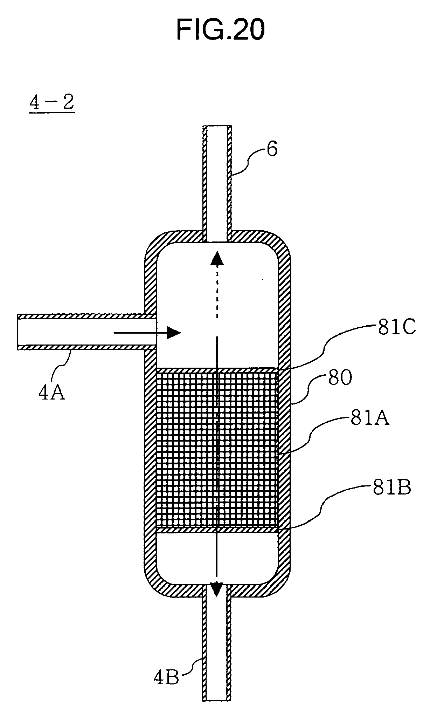

FIG. 20 is a schematic sectional view showing another example of the gas-liquid separator of the present invention;

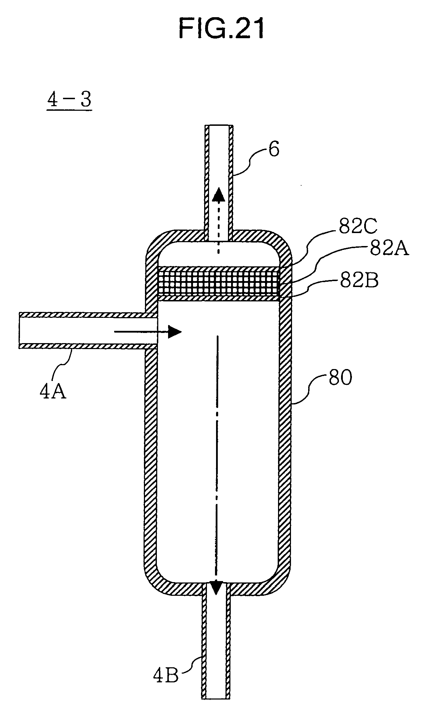

FIG. 21 is a schematic sectional view showing still another example of the gas-liquid separator of the present invention;

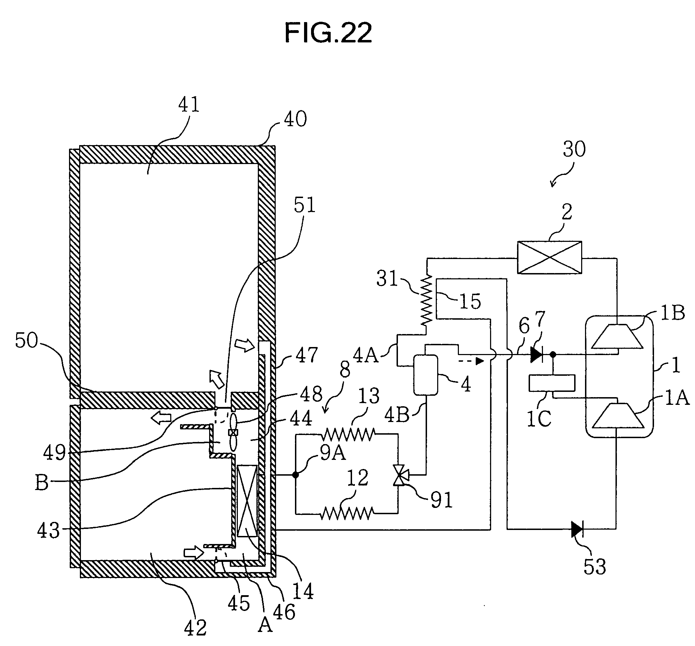

FIG. 22 is a schematic constitution diagram showing an application example of the refrigerating device to a refrigerator in Embodiment 7 of the present invention;

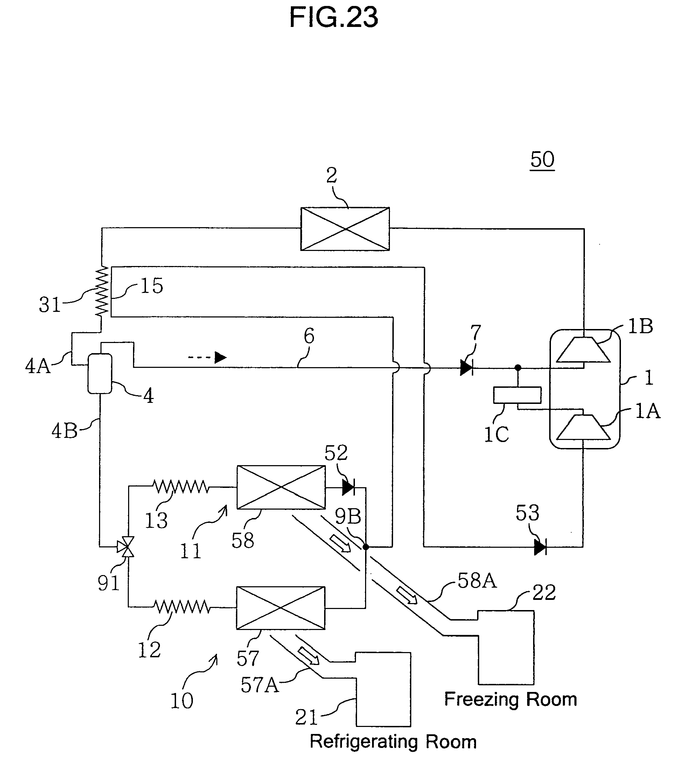

FIG. 23 is a refrigerant circuit diagram showing a refrigerating device in Embodiment 8 of the present invention;

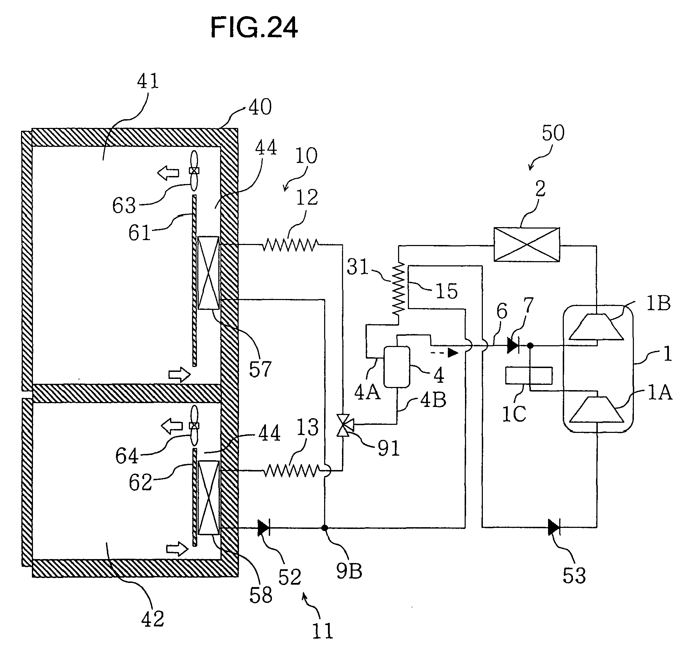

FIG. 24 is a schematic constitution diagram showing an application example of the refrigerating device to a refrigerator in Embodiment 8 of the present invention;

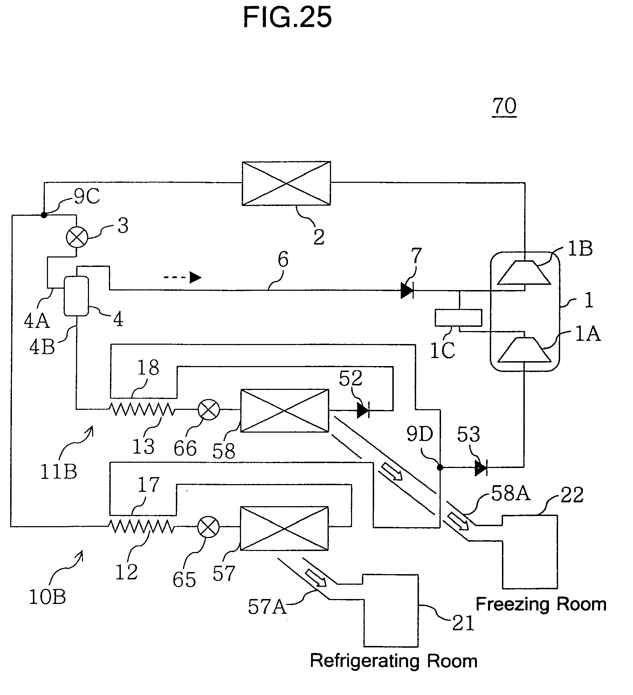

FIG. 25 is a refrigerant circuit diagram showing a refrigerating device in Embodiment 9 of the present invention;

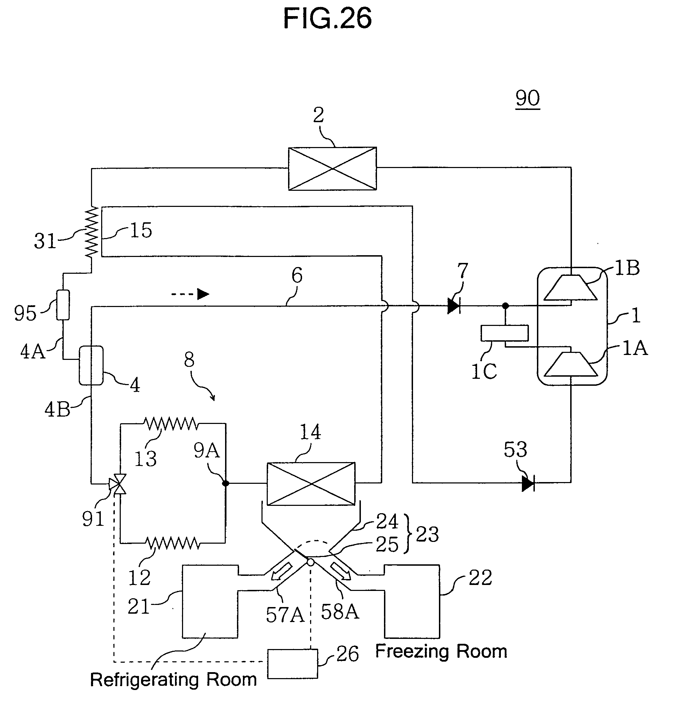

FIG. 26 is a refrigerant circuit diagram showing a refrigerating device in Embodiment 10 of the present invention; and

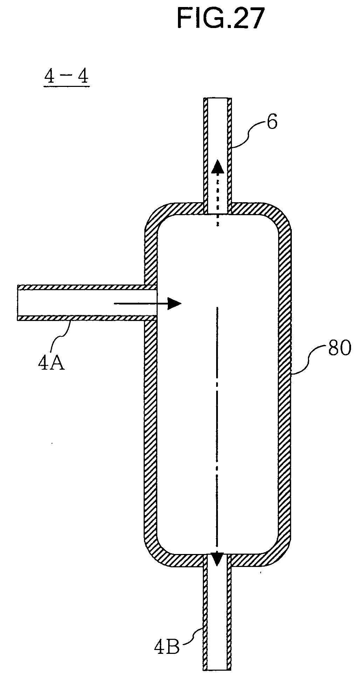

FIG. 27 is a schematic sectional view showing a gas-liquid separator applicable to the refrigerating device in Embodiment 10 of the present invention.

### DETAILED DESCRIPTION OF THE PREFERRED EMBODIMENTS

There will be described hereinafter preferred embodiments of a refrigerating device and a refrigerator provided with the refrigerating device in the present invention in detail with reference to the drawings.

### (Embodiment 1)

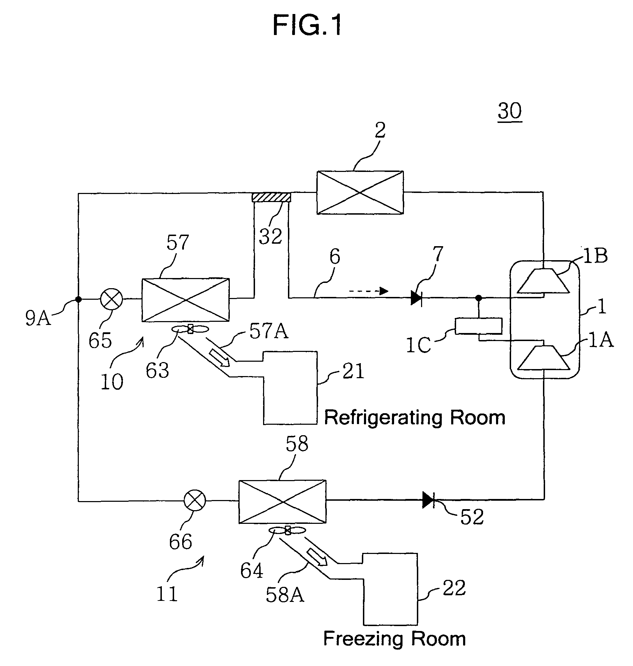

One embodiment of the present invention will be described in detail with reference to the drawings. FIG. 1 shows a refrigerant circuit diagram of a refrigerating device as one embodiment of the present invention. A refrigerating device 30 is constituted of: a compressor 1; a radiator 2 connected a discharge side of this compressor 1; first heat absorbing means 10 and second heat absorbing means 11 connected to an outlet side of this radiator 2; and a cooling heat exchanger 32. The outlet side of the first heat absorbing means 10 is connected to an intermediate-pressure portion of the compressor 1, and the outlet side of the second heat absorbing means 11 is connected to a suction side of the compressor 1 to constitute a refrigerating cycle.

The first heat absorbing means 10 includes: a first expansion valve 65 in which a refrigerant from a branch point 9A circulates; and a refrigerating heat sink 57. The second heat absorbing means 11 includes: a second expansion valve 66 in which the refrigerant from the branch point 9A circulates; and a freezing heat sink 58.

The first heat absorbing means 10 and the second heat absorbing means 11 function in different temperature zones. A refrigerant pipe from the radiator 2 is branched from the branch point 9A into one pipe as the first heat absorbing means 10 and the other pipe as the second heat absorbing means 11. The connected pipes are introduced into an intermediate-pressure portion and a suction port of the compressor 1.

Here, the first and second expansion valves 65 and 66 are constituted in such a manner that a throttle degree is variable. This throttle degree is changed to lower a refrigerant pressure to a predetermined pressure before the refrigerant reaches the heat sinks 57, 58, and it is possible to control an evaporation temperature of the refrigerant in the heat sinks 57, 58.

Moreover, in the present embodiment, the refrigerating device 30 is provided with the cooling heat exchanger 32 and a check valve 7 between the first heat absorbing means 10 and the intermediate-pressure portion of the compressor 1, and a check valve 52 is disposed between the second heat absorbing means 11 and the suction side of the compressor 1.

The cooling heat exchanger 32 is disposed in order to exchange heat between the refrigerant discharged from the radiator 2 and the refrigerant discharged from the heat sink 57. After the refrigerant discharged from the heat sink 57 is discharged from the cooling heat exchanger 32, the refrigerant is introduced into the intermediate-pressure portion via a refrigerant introducing tube 6 connected to the intermediate-pressure portion of the compressor 1. The refrigerant introducing tube 6 is provided with the check valve 7.

It is to be noted that as described above, the first expansion valve 65 is constituted in such a manner that the throttle degree is variable, and the throttle degree of the first expansion valve 65 is changed to lower, to a predetermined pressure, a pressure of the refrigerant entering the first heat absorbing means 10 via the branch point 9A before the refrigerant reaches the cooling heat exchanger 32. Moreover, the refrigerant discharged from the first expansion valve 65 exchanges heat with the refrigerant discharged from the radiator 2 in the cooling heat exchanger 32, and is warmed to form a gas refrigerant. The refrigerant is returned to the intermediate-pressure portion of the compressor 1 via the refrigerant introducing tube 6.

The compressor 1 is a two-stage compressor including a first-stage compressing section 1A and a second-stage compressing section 1B in a sealed container. An intermediate cooling unit 1C is disposed in a refrigerant pipe connecting the first-stage compressing section 1A to the second-stage compressing section 1B outside the sealed container. The refrigerant introducing tube 6 is connected in such a manner that the gas refrigerant discharged from the cooling heat exchanger 32 can be introduced into the intermediate-pressure portion of the compressor 1, that is, between the intermediate cooling unit 1C and the second-stage compressing section 1B. It is to be noted that the gas refrigerant discharged from the cooling heat exchanger 32 is introduced into the intermediate-pressure portion of the compressor 1 owing to a difference pressure in the refrigerant introducing tube 6 as shown by a broken-line arrow. This compressor 1 is not limited to the two-stage compressor. For example, in a single-stage compressor, the refrigerant introducing tube 6 may be returned to the intermediate-pressure portion of the single-stage compressor. Alternatively, a plurality of compressors may be connected.

Further in the present embodiment, cold air passed through the heat sink 57 is fed to a refrigerating room 21 via a duct 57A by means of a fan 63 disposed in the vicinity of the heat sink 57, and cold air passed through the heat sink 58 is fed to a freezing room 22 via a duct 58A by means of a fan 64 disposed in the vicinity of the freezing heat sink 58.

Here, in the refrigerating device 30 of the present embodiment, as the refrigerant, there is used a carbon dioxide refrigerant (CO₂) which is a natural refrigerant having a small environmental load in consideration of flammability, toxicity and the like. As oil which is a lubricant of the compressor 1, there is used, for example, mineral oil, alkyl benzene oil, ether oil, ester oil, polyalkylene glycol (PAG), polyol ester (POE) or the like.

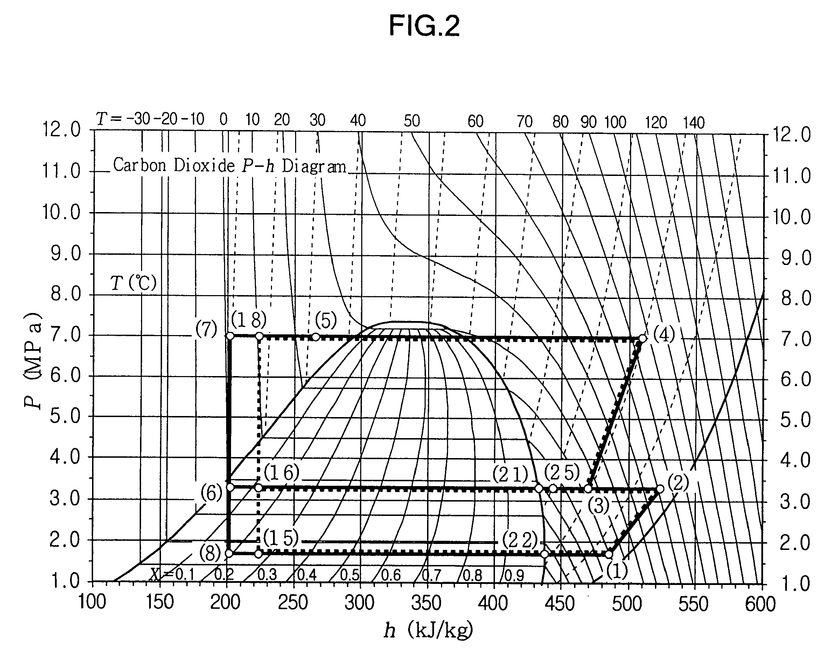

There will be described an operation of the refrigerating device 30 of the present embodiment constituted as described above with reference to FIGS. 1 and 2. FIG. 2 is an enthalpy-pressure (ph) chart of a refrigerating cycle in the present embodiment.

In the refrigerating device 30 of the present embodiment, there are selected as required a freezing operation in which the second heat absorbing means 11 mainly functions, and a freezing and refrigerating operation in which the first heat absorbing means 10 and the second heat absorbing means 11 perform refrigerating and freezing.

First, the freezing operation will be described with reference to a cycle chart shown by a solid line in FIG. 2. It is to be noted that this freezing operation refers to an operation in which the above-described heat sink 58 is allowed to function at a predetermined temperature (e.g., around -26°C) to cool the freezing room 22 in a concentrated manner.

In the present embodiment, when the compressor 1 is operated, the refrigerant discharged from the compressor 1 radiates heat in the radiator 2, and is cooled. That is, the refrigerant is first circulated in order of: (1) suction into the first-stage compressing section 1A; (2) discharge from the first-stage compressing section 1A; (3) suction into the second-stage compressing section 1B; and (4) discharge from the second-stage compressing section 1B. Thereafter, the refrigerant flows through (5) an outlet of the radiator 2 and an inlet to the cooling heat exchanger 32 and (7) an outlet of the cooling heat exchanger 32 to reach the branch point 9A. The refrigerant is then branched, a part of the refrigerant circulates in the first heat absorbing means 10, and the remaining refrigerant circulates in the second heat absorbing means 11. It is to be noted that the refrigerant discharged from the radiator 2 is super-cooled by the cooling heat exchanger 32 before reaching the branch point 9A. This respect will be described later in detail.

The refrigerant circulated from the branch point 9A to the first heat absorbing means 10 reaches (6) an outlet of the first expansion valve 65 to form a two-phase mixture of gas and liquid. Moreover, this refrigerant as the two-phase mixture flows into the heat sink 57. In the present freezing operation, the fan 63 disposed in the vicinity of the heat sink 57 is stopped by a control unit (not shown) to thereby substantially stop a heat absorbing function of the heat sink 57. Accordingly, the refrigerant discharged from the first expansion valve 65 hardly absorbs heat from a surrounding area in the heat sink 57, and reaches the cooling heat exchanger 32. In the cooling heat exchanger 32, the refrigerant exchanges heat with the refrigerant discharged from the radiator 2, and is warmed to form the gas refrigerant. The refrigerant is introduced into the intermediate-pressure portion of the compressor 1, that is, between the intermediate cooling unit 1C and the second-stage compressing section 1B via the refrigerant introducing tube 6. That is, (6) indicates the outlet of the first expansion valve 65, and (21) indicates the outlet of the cooling heat exchanger 32. The refrigerant discharged from the outlet reaches (3) the suction into the second-stage compressing section 1B, and is compressed in the second-stage compressing section 1B. It is to be noted that the refrigerant discharged from the radiator 2 is super-cooled by means of the heat exchange in the cooling heat exchanger 32.

On the other hand, the refrigerant circulated from the branch point 9A to the second heat absorbing means 11 exchanges heat with the refrigerant circulated on the side of the first heat absorbing means 10 as described above in the cooling heat exchanger 32, and the refrigerant is super-cooled. In this state, the refrigerant reaches the second expansion valve 66. That is, the refrigerant circulated on the side of the second heat absorbing means 11 is circulated in order of: (7) an inlet to the second expansion valve 66; (8) an outlet of the second expansion valve 66 and an inlet to the heat sink 58; and (22) an outlet of the heat sink 58. It is to be noted that a liquid refrigerant which has entered the heat sink 58 evaporates in the heat sink 58 to absorb heat from the surrounding area because the fan 64 is operated by the control unit (not shown). Thereafter, the refrigerant returns to the suction port of the compressor 1. That is, (1) indicates the suction into the first-stage compressing section 1A.

On the other hand, there is formed a cycle shown by a broken line in FIG. 2 during the freezing and refrigerating. It is to be noted that this freezing and refrigerating operation refers to an operation in which the heat sinks 57 and 58 are operated (e.g., the heat sink 57 around -5°C and the heat sink 58 around -5°C) to cool the refrigerating room 21 and the freezing room 22). Even in this case, when the compressor 1 is operated, the refrigerant discharged from the compressor 1 radiates heat in the radiator 2, and is cooled. That is, first the refrigerant is circulated in order of: (1) suction into the first-stage compressing section 1A; (2) discharge from the first-stage compressing section 1A; (3) suction into the second-stage compressing section 1B; and (4) discharge from the second-stage compressing section 1B. Thereafter, the refrigerant flows from (5) the outlet of the radiator 2 and the inlet to the cooling heat exchanger 32 and (18) the outlet of the cooling heat exchanger 32 to reach the branch point 9A, and the refrigerant is then branched. A part of the refrigerant circulates in the first heat absorbing means 10, and the remaining refrigerant circulates in the second heat absorbing means 11. It is to be noted that the refrigerant discharged from the radiator 2 reaches the branch point 9A in a state in which the refrigerant is super-cooled by the cooling heat exchanger 32 in the same manner as in the freezing operation, and a super-cooled degree is smaller than that during the freezing operation. Details will be described later.

The refrigerant circulated from the branch point 9A to the first heat absorbing means 10 reaches (16) the outlet of the first expansion valve 65 to form a two-phase mixture of gas and liquid. Moreover, this refrigerant as the two-phase mixture flows into the heat sink 57. In the present freezing and refrigerating operation, unlike the freezing operation, the fan 63 disposed in the vicinity of the heat sink 57 is operated by the control unit (not shown) to thereby operate the heat sink 57. Accordingly, after evaporating in the heat sink 57 to absorb heat from the surrounding area, the refrigerant discharged from the first expansion valve 65 reaches the cooling heat exchanger 32, and exchanges heat with the refrigerant discharged from the radiator 2 in the cooling heat exchanger 32, and the refrigerant is warmed. The refrigerant in the form of the gas refrigerant is introduced into the intermediate-pressure portion of the compressor 1, that is, between the intermediate cooling unit 1C and the second-stage compressing section 1B via the refrigerant introducing tube 6. That is, (16) indicates the outlet of the first expansion valve 65 and the inlet to the heat sink 57, (21) indicates the outlet of the heat sink 57 and the inlet to the cooling heat exchanger 32, and (25) indicates the outlet of the cooling heat exchanger 32. The refrigerant discharged from the cooling heat exchanger reaches (3) the suction port of the second-stage compressing section 1B, and is compressed in the second-stage compressing section 1B. It is to be noted that the refrigerant discharged from the radiator 2 is super-cooled by means of the heat exchange in the cooling heat exchanger 32, but in the present freezing and refrigerating operation, the heat absorbing function of the heat sink 57 is exerted unlike the freezing operation. Therefore, a heat exchange amount in the cooling heat exchanger 32 is smaller than that during the freezing operation. Accordingly, the super-cooled degree of the refrigerant discharged from the radiator 2 is smaller than that during the freezing operation.

On the other hand, the refrigerant circulated from the branch point 9C to the second heat absorbing means 11 side exchanges heat with the refrigerant circulated on the side of the first heat absorbing means 10 in the cooling heat exchanger 32 as described above, and the refrigerant in a super-cooled state reaches the second expansion valve 66. That is, the refrigerant circulated on the side of the second heat absorbing means 11 is circulated in order of: (18) the inlet to the second expansion valve 66: (15) the outlet of the second expansion valve 66 and the inlet to the heat sink 58; and (22) the outlet of the heat sink 58. Since the fan 64 is operated by the control unit (not shown), the liquid refrigerant which has entered the heat sink 58 evaporates in the heat sink 58 to absorb heat from the surrounding area. Thereafter, the refrigerant returns to the suction port of the compressor 1. That is, (1) indicates the suction into the first-stage compressing section 1A. During both of the freezing operation and the freezing and refrigerating operation, the refrigerant circulates as described above to change its state, and the refrigerating cycle is formed.

Here, in the present embodiment, since the carbon dioxide refrigerant is introduced into the refrigerant circuit, a dry degree of the refrigerant entering the expansion valves 65, 66 is excessively high in the refrigerant circuit for use in a conventional chlorofluorocarbon-based refrigerant or an HC-based refrigerant, that is, the refrigerant circuit in which the expansion valves 65, 66 are disposed immediately after the radiator 2 even in a case where the atmospheric temperature around the radiator 2, that is, the temperature in (5) the outlet of the radiator 2 in FIG. 2 is about +22°C as in the present embodiment. Therefore, a ratio of the gas refrigerant in the refrigerant is high, and it is difficult to obtain a sufficient cooling performance.

To solve the problem, in the present embodiment, the refrigerant pipe is branched from the branch point 9A, and one pipe is provided with the first heat absorbing means 10 as well as the cooling heat exchanger 32 to super-cool the refrigerant which has entered the first and second heat absorbing means 10 and 11 in the cooling heat exchanger 32. According to such constitution, a high cooling effect can be obtained even in a case where the carbon dioxide refrigerant having the above-described characteristics is used. In this case, the refrigerant discharged from the side of the first heat absorbing means 10 is introduced as the gas refrigerant into the intermediate-pressure portion of the compressor 1. Therefore, a compression efficiency in the compressor 1 can be improved, and an efficiency of the refrigerating device 30 can further be improved.

Moreover, during the freezing operation, unlike the freezing and refrigerating operation, the fan 63 disposed in the vicinity of the heat sink 57 is stopped to increase a heat exchange amount in the cooling heat exchanger 32. According to this constitution, the super-cooled degree of the refrigerant entering the second heat absorbing means 11 can further be increased, and the freezing operation can be performed with a higher efficiency.

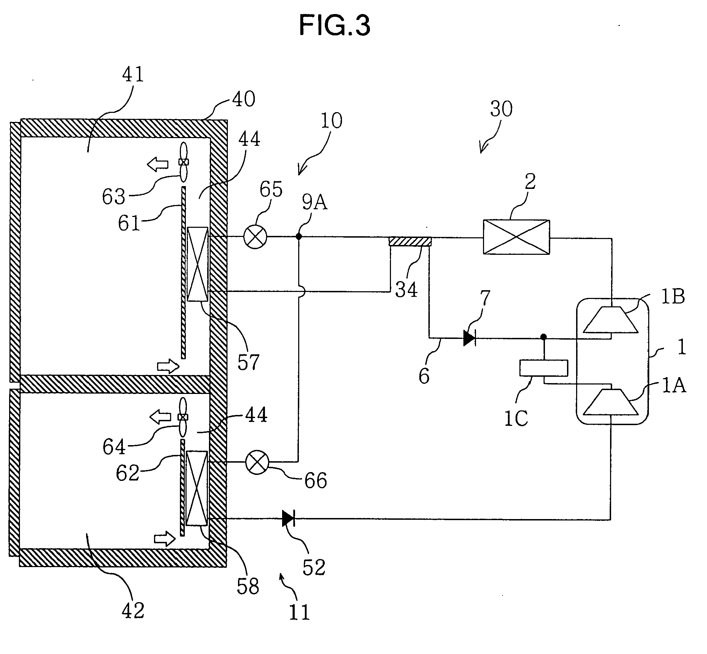

Next, there will be described an example in which the refrigerating device 30 of the present embodiment is applied to a refrigerator with reference to FIG. 3.

FIG. 3 shows a schematic constitution diagram of the refrigerator provided with the refrigerating device 30 of the present embodiment. This refrigerator 40 is constituted of: a refrigerating room 41 disposed in an upper stage; and a freezing room 42 disposed in a lower stage. Moreover, refrigerator partition walls 61, 62 are disposed in inner parts of the respective rooms 41, 42, and the heat sinks 57, 58 and fans 63, 64 are disposed in air paths 44 defined by the refrigerator partition walls 61, 62.

In the present embodiment, since the refrigerator 40 is provided with the refrigerating device 30 constituted as described above, a high cooling performance and a high-efficiency operation are possible even in a case where carbon dioxide is used in the refrigerant.

### (Embodiment 2)

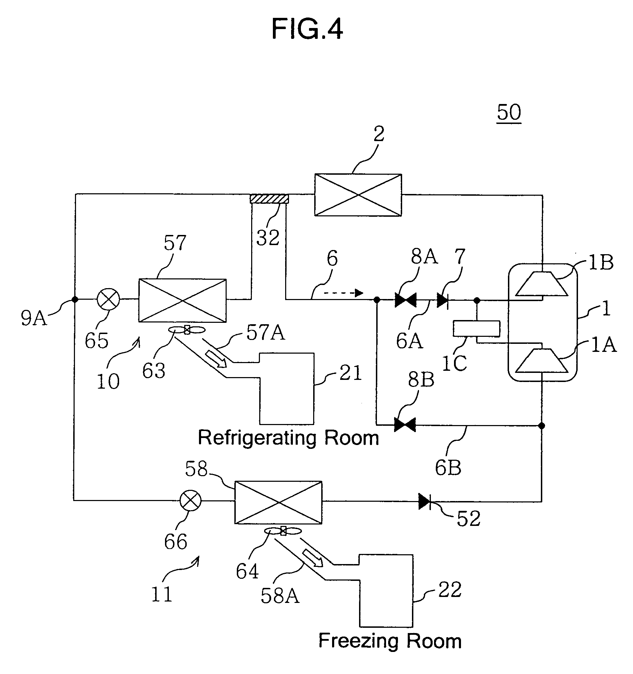

Next, Embodiment 2 of the present invention will be described with reference to FIG. 4. FIG. 4 shows a refrigerant circuit diagram of a refrigerating device 50 in this case. The present embodiment is different from Embodiment 1 in that a branch point 9B is disposed halfway in a refrigerant introducing tube 6 between a cooling heat exchanger 32 and an intermediate-pressure portion of a compressor 1. One pipe 6A is connected to the intermediate-pressure portion of the compressor 1, that is, between an intermediate cooling unit 1C and a second-stage compressing section 1B in the compressor 1 in the same manner as in Embodiment 1. Moreover, the other pipe 6B is connected to a suction side of a first-stage compressing section 1A in the compressor 1, and these pipes 6A and 6B are provided with electromagnetic valves 8A and 8B.

Accordingly, in the refrigerating device 50 of the present embodiment, a refrigerating operation can be executed in addition to the freezing operation and the freezing and refrigerating operation of Embodiment 1. That is, in the refrigerating operation of the refrigerating device 50, a second expansion valve 66 of second heat absorbing means 11is closed, the electromagnetic valve 8A is closed, and the electromagnetic valve 8B is opened to thereby circulate a refrigerant on the side of first heat absorbing means 10 only. Moreover, a fan 63 disposed in the vicinity of a heat sink 57 is operated by a control unit (not shown) to thereby cool a refrigerating room 21. It is to be noted that in this case, the number of revolutions of the compressor 1 may be lowered if necessary depending on a state of a cooling load or the like of the refrigerating room 21. It is assumed that in the present embodiment, the electromagnetic valve 8A is opened and the electromagnetic valve 8B is closed during the freezing operation and the freezing and refrigerating operation unlike the refrigerating operation.

It is to be noted that the refrigerating device 50 of the present embodiment can be applied to a refrigerator in the same manner as in the refrigerating device 30 of Embodiment 1.

The present invention has been described above in accordance with the embodiments, but the present invention is not limited to the embodiments, and various modifications are possible. For example, a carbon dioxide refrigerant is introduced into a refrigerant circuit in the above-described embodiments, but the present invention is not limited to the embodiments, and is applicable to another embodiment in which a chlorofluorocarbon-based refrigerant is introduced.

Moreover, the expansion valves 65 and 66 of the above-described embodiments may be changed to capillary tubes if necessary.

### (Embodiment 3)

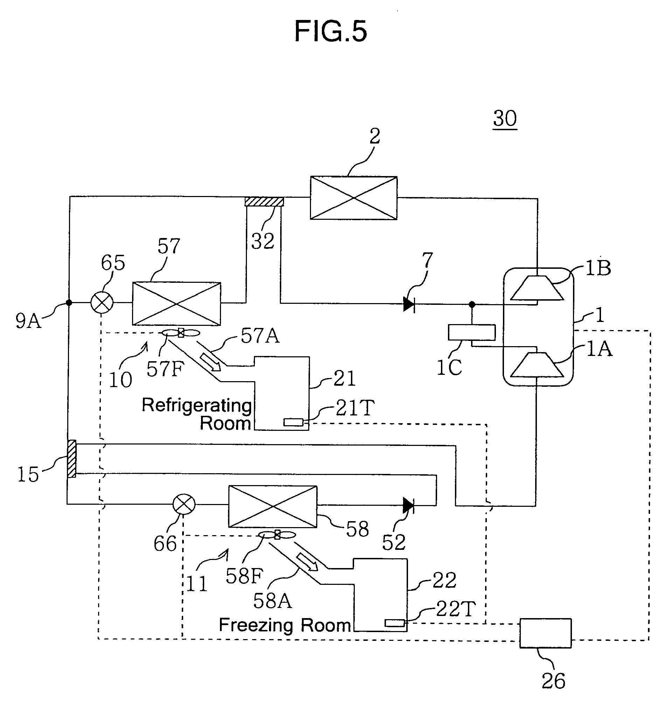

Next, Embodiment 3 of the present invention will be described in detail with reference to the drawings. FIG. 5 shows a refrigerant circuit diagram of a refrigerating device in the present embodiment. A refrigerating device 30 is provided with: a compressor 1; a radiator 2 connected to a discharge side of this compressor 1; first heat absorbing means 10 and second heat absorbing means 11 connected to an outlet side of this radiator 2; and a cooling heat exchanger 32. An outlet side of the first heat absorbing means 10 is connected to an intermediate-pressure portion of the compressor 1, and an outlet side of the second heat absorbing means 11 is connected to a suction port of the compressor 1 to constitute a refrigerating cycle.

Moreover, the refrigerating device 30 is provided with: a check valve 7 disposed between the first heat absorbing means 10 and the intermediate-pressure portion of the compressor 1; a check valve 52 and a heat exchanger 15 disposed between the second heat absorbing means 11 and the suction port of the compressor 1; and a control unit 26. The heat exchanger 15 is constituted in such a manner that heat can be exchanged between a refrigerant discharged from the second heat absorbing means and a refrigerant which is going to enter a low-pressure expansion valve 65.

The first heat absorbing means 10 includes the intermediate-pressure expansion valve 65 in which the refrigerant from a branch point 9A circulates, and an intermediate-pressure heat sink 57. The second heat absorbing means 11 includes a low-pressure expansion valve 66 in which the refrigerant from the branch point 9A circulates, and a low-pressure heat sink 58. Moreover, the first heat absorbing means 10 and the second heat absorbing means 11 function in different temperature zones, a refrigerant pipe from the radiator 2 is branched at the branch point 9A, one pipe is connected to the first heat absorbing means 10, and the other pipe is connected to the second heat absorbing means 11.

The intermediate-pressure expansion valve 65 and the low-pressure expansion valve 66 are constituted in such a manner that a throttle degree is variable. This throttle degree is changed to lower a refrigerant pressure to a predetermined pressure before the refrigerant reaches the heat sinks 57, 58, and it is possible to control an evaporation temperature of the refrigerant in the heat sinks 57, 58.

The cooling heat exchanger 32 is disposed in order to exchange heat between the refrigerant discharged from the radiator 2 and the refrigerant discharged from the intermediate-pressure heat sink 57. After the refrigerant discharged from the intermediate-pressure heat sink 57 is discharged from the cooling heat exchanger 32, the refrigerant is introduced into the intermediate-pressure portion of the compressor 1 via the check valve 7.

It is to be noted that since the expansion valve 65 is constituted so that the throttle degree is variable as described above, the throttle degree of this intermediate-pressure expansion valve 65 is changed to lower, to a predetermined pressure, a pressure of the refrigerant circulated from the branch point 9A to the intermediate-pressure expansion valve 65 before the refrigerant reaches the intermediate-pressure heat sink 57.

The compressor 1 is a two-stage compressor including a first-stage compressing section 1A as a front-stage compression element and a second-stage compressing section 1B as a rear-stage compression element in a sealed container. An intermediate cooling unit 1C is disposed in a refrigerant pipe of the first-stage compressing section 1A on a discharge side. It is to be noted that the gas refrigerant discharged from the first heat absorbing means 10 and passed through the cooling heat exchanger 32 is introduced between the intermediate cooling unit 1C and the suction port of the second-stage compressing section 1B.

Further in the refrigerating device 30 of the present embodiment, cold air passed through the intermediate heat sink 57 is fed to a refrigerating room 21 via a duct 57A by means of a fan 57F disposed in the vicinity of the heat sink 57, and cold air passed through the low-pressure heat sink 58 is fed to a freezing room 22 via a duct 58A by means of a fan 58F disposed in the vicinity of the heat sink 58.

The control unit 26 is control means for controlling an operation frequency or an ON-OFF state of the compressor 1, open degrees of the expansion valves 65 and 66, ON-OFF states of the fans 57F and 58F and the like based on information of temperature sensors 21T and 22T disposed in the refrigerating room 21 and the freezing room 22, respectively. The unit is constituted of a general-purpose microcomputer.

It is to be noted that in the present embodiment, in FIG. 5, a high-pressure part of a refrigerating cycle of the refrigerating device 30 is operated which corresponds to a part from the discharge side of the second-stage compressing section 1B to inlets to the intermediate-pressure expansion valve 65 and the low-pressure expansion valve 66 via the radiator 2 and the cooling heat exchanger 32. An intermediate-pressure part of the refrigerating cycle of the refrigerating device 30 is operated which corresponds to a part from the discharge side of the first-stage compressing section 1A to the suction port of the second-stage compressing section 1B via the intermediate cooling unit 1C, and the outlet of the intermediate-pressure expansion valve 65 to the suction port of the second-stage compressing section 1B via the intermediate-pressure heat sink 57 and the cooling heat exchanger 32. Moreover, a low-pressure part of the refrigerating cycle of the refrigerating device 30 is operated which corresponds to a part from the outlet of the low-pressure expansion valve 66 to the suction port of the first-stage compressing section 1A via the low-pressure heat sink 58 and the heat exchanger 15.

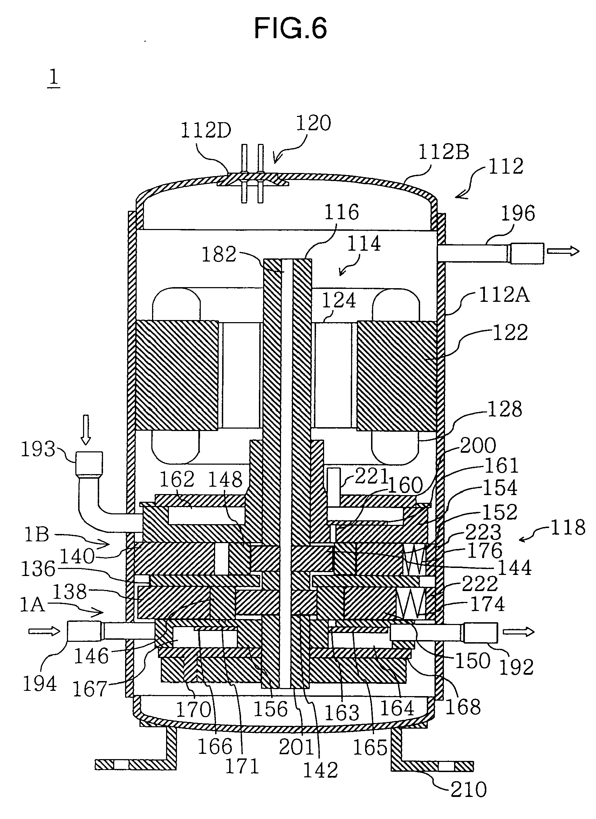

Here, the compressor 1 of the present embodiment will be described with reference to FIG. 6. FIG. 6 is a schematic sectional view of the compressor 1.

The compressor 1 is a high inner pressure type two-stage compression system rotary compressor. The compressor 1 is provided with a sealed container 112 whose upper and lower ends are both sealed and which substantially has a vertically long cylindrical shape. A bottom portion of this sealed container 112 is constituted as an oil reservoir. The sealed container 112 includes: an electromotive element 114; and a rotary compressing section 118 constituted of a first compressing section 1A and a second compressing section 1B driven via a rotation shaft 116 of the electromotive element 114, and an outer face of a bottom of the container is provided with leg portions 210 for fixing the compressor 1 to, for example, a refrigerator housing (not shown).

The sealed container 112 is constituted of: a container main body 112A which stores the electromotive element 114 and the rotary compressing section 118; and an end cap (lid member) 112B which closes an end portion of this container main body 112A on the side of the electromotive element 114. A circular attachment hole 112D is formed in this end cap 112B, and a terminal 120 (wiring line is omitted) for supplying power to the electromotive element 114 is attached to the attachment hole 112D.

The electromotive element 114 is constituted of: a stator 122 annularly attached along an inner peripheral face of the sealed container 112; and a rotor 124 inserted in the electromotive element and internally disposed at a slight interval from the inner peripheral face of this stator 122. This rotor 124 is fixed to the rotation shaft 116 which passes through the center and which extends in an axial center direction of the sealed container 112. Here, the stator 122 has: a laminate (not shown) constituted of laminated donut-shaped electromagnetic steel plates; and a stator coil 128 wound around a tooth portion of this laminate by a direct winding method. Moreover, the rotor 124 is formed of a laminate of electromagnetic steel plates in the same manner as in the stator 122. The rotor is formed by inserting a permanent magnet in this laminate.

Moreover, in the rotation shaft 116, an oil passage 182 extends through the axial center of the shaft in a perpendicular direction. One end of this oil passage 182 on the side of the rotary compressing section 118 opens to the oil reservoir which is the bottom portion of the sealed container 112. The other end of the passage on the side of the electromotive element 114 opens on the side of the end cap 112B. It is to be noted that this oil passage 182 communicates with sliding portions of the respective compressing sections 1A, 1B, and is connected to the compressing sections 1A, 1B so that oil can be supplied.

The first-stage compressing section 1A and the second-stage compressing section 1B of the rotary compressing section 118 are constituted of first and second cylinders 138, 140, and an intermediate partition plate 136 is sandwiched between these cylinders 138 and 140. The respective compressing sections 1A, 1B are constituted of: first and second rollers 146, 148 which are fitted into the first and second cylinders 138, 140 disposed on opposite sides (upper and lower sides in FIG. 5) of the intermediate partition plate 136 and first and second eccentric sections 142, 144 disposed on the rotation shaft 116 and having a phase difference of 180 degrees and which eccentrically rotate in the first and second cylinders 138, 140; first and second vanes 150, 152 which abut on these rollers 146, 148, respectively, to define low-pressure and high-pressure chamber sides in the cylinders 138, 140; and support members 154, 156 which close an open face of the cylinder 140 on the side of the electromotive element 114 and an open face of the cylinder 138 on the side opposite to the electromotive element 114 and which also function as bearings of the rotation shaft 116.

Outside the vanes 150, 152 (the right side in FIG. 5), there are arranged springs 174, 176 which abut on outer end portions of the vanes 150, 152 to urge the vanes 150, 152 toward the rollers 146, 148. Furthermore, the springs 174, 176 are provided with plugs 222, 223 made of metals on the side of the sealed container 112, and the plugs prevent the springs 174, 176 from being disengaged. A back pressure chamber (not shown) is constituted in the second vane 152, and a pressure on the side of the high-pressure chamber of the cylinder 140 is applied as a back pressure to this back pressure chamber.

The support members 154, 156 are provided with discharge noise absorbing chambers 162, 164 formed by partially depressing the members and closing the depressed portions with a baffle plate 200 and a cover 168, respectively. That is, the discharge noise absorbing chamber 162 is formed by closing the depressed portion of the support member 154 with the baffle plate 200, and the discharge noise absorbing chamber 164 is formed by closing the depressed portion of the support member 156 with the cover 168. Furthermore, the support member 156 on the side of the first-stage compressing section 1A is provided with an oil discharge chamber 167 formed by depressing a portion other than the discharge noise absorbing chamber 164 of the support member 156 and closing the portion with the cover 168 in the same manner as in the discharge noise absorbing chamber 164.

Moreover, in the respective compressing sections 1A, 1B, spaces formed between the cylinders 138, 140 and the rollers 146, 148 and between the cylinders and the vanes 150, 152 are closed with the support members 156, 154 and the intermediate partition plate 136 to thereby constitute a compression chamber which sucks and compresses the refrigerant.

Here, a rear-stage discharge port 160 is disposed between the compression chamber of the second-stage compressing section 1B and the discharge noise absorbing chamber 162, and provided with a rear-stage discharge valve 161 which is opened in a case where the refrigerant in the compression chamber reaches a predetermined pressure. A front-stage discharge port 163 is disposed between the compression chamber of the first-stage compressing section 1A and the discharge noise absorbing chamber 164, and provided with a front-stage discharge valve 165 which is opened in a case where the refrigerant in the compression chamber reaches a predetermined pressure.

Furthermore, an oil discharge port 171 is disposed between the compression chamber of the first-stage compressing section 1A and the oil discharge chamber 167, and provided with an oil discharge valve 166 which is opened in a case where a large amount of oil is sucked to cause liquid compression in the compression chamber and the predetermined pressure is reached. This oil discharge valve 166 is closed by the back pressure due to the high-pressure refrigerant discharged from the second-stage compressing section 1B, and the oil discharge chamber 167 is provided with a valve back pressure inflow tube 170 which communicates with the inside of the sealed container 112. The high-pressure refrigerant is discharged from the second-stage compressing section 1B into the sealed container 112 via a discharge pipeline 221 described later to close the oil discharge valve 166 via the valve back pressure inflow tube 170.

The discharge noise absorbing chamber 162 communicates with the sealed container 112 via the discharge pipeline 221 extending through the baffle plate 200 to open on the side of the electromotive element 114. The high-pressure refrigerant gas compressed in the second-stage compressing section 1B is discharged toward the electromotive element 114 in the sealed container 112 via the discharge pipeline 221. In this case, the refrigerant gas is mixed with the oil supplied to the second-stage compressing section 1B, but this oil is also discharged toward the electromotive element 114 in the sealed container 112. Moreover, the oil mixed in the refrigerant gas is separated from the refrigerant gas, and stored in the oil reservoir which is the bottom portion of the sealed container 112.

Moreover, the sealed container 112 is connected to: a refrigerant introducing tube 194 for introducing the refrigerant gas into the first-stage compressing section 1A; an intermediate refrigerant discharge tube 192 which discharges, to the outside of the sealed container 112, the refrigerant gas compressed in the first-stage compressing section 1A to obtain an intermediate pressure; an intermediate refrigerant introducing tube 193 which introduces the intermediate-pressure refrigerant discharged from the intermediate refrigerant discharge tube 192 into the second-stage compressing section 1B via the intermediate cooling unit 1C as described above; and a refrigerant discharge tube 196 for discharging, from the compressor 1, the refrigerant gas compressed in the second-stage compressing section 1B under the high pressure and discharged into the sealed container 112 via the discharge pipeline 221 as described above. The connected tubes are inserted in the sealed container.

Furthermore, in the refrigerating device 30 of the present embodiment, as the refrigerant, there is used a carbon dioxide refrigerant (CO₂) which is a natural refrigerant having a small environmental load in consideration of flammability, toxicity and the like. As oil which is a lubricant of the compressor 1, there is used, for example, mineral oil, alkyl benzene oil, ether oil, polyalkylene glycol (PAG), polyol ester (POE) or the like.

Since carbon dioxide is used in the refrigerating device 30 in this manner, the high pressure part of the refrigerating cycle is brought into a supercritical state in a case where an outside air temperature is not less than a critical temperature (about +31°C) of carbon dioxide. Accordingly, the refrigerating device 30 is operated as a transfer critical cycle.

There will be described an operation of the refrigerating device 30 constituted as described above in the present embodiment with reference to FIG. 5. The control unit 26 selectively allows the refrigerating device 30 to perform the freezing operation allowing the second heat absorbing means 11 to function, the freezing and refrigerating operation allowing the first heat absorbing means 10 and the second heat absorbing means 11 to function, and the refrigerating operation allowing the first heat absorbing means 10 to function.

First, the freezing operation will be described. It is to be noted that this freezing operation is an operation allowing the low-pressure heat sink 58 to function at a predetermined temperature (e.g., around -26°C) and cool the freezing room 22.

In the refrigerating device 30 of the present embodiment, when the compressor 1 is operated, the intermediate-pressure refrigerant compressed and discharged from the first-stage compressing section 1A is cooled in the intermediate cooling unit 1C. Thereafter, the refrigerant is further compressed and discharged from the second-stage compressing section 1B to radiate heat in the radiator 2, and is cooled. Thereafter, the refrigerant discharged from the radiator 2 reaches the branch point 9A via the cooling heat exchanger 32, and is branched at the point. A part of the refrigerant circulates to the first heat absorbing means 10, and the remaining refrigerant circulates to the second heat absorbing means 11. It is to be noted that the refrigerant discharged from the radiator 2 is super-cooled by the cooling heat exchanger 32 to reach the branch point 9A in this state.

A pressure of the refrigerant circulated from the branch point 9A to the first heat absorbing means 10 is reduced by the expansion valve 65, and the refrigerant forms a two-phase mixture (gas/liquid mixed state) of gas and liquid. Moreover, this refrigerant flows into the intermediate-pressure heat sink 57 in the form of the two-phase mixture. However, in the present freezing operation, the control unit 26 stops the fan 57F disposed in the vicinity of the intermediate-pressure heat sink 57 to thereby substantially stop the heat absorbing function of the heat sink 57.

Accordingly, the refrigerant discharged from the intermediate expansion valve 65 hardly absorbs heat from the surrounding area in the intermediate-pressure heat sink 57, and reaches the cooling heat exchanger 32. In the cooling heat exchanger 32, the refrigerant exchanges heat with the refrigerant discharged from the radiator 2, and is warmed to form the gas refrigerant. The refrigerant is introduced into the intermediate-pressure portion of the compressor 1, that is, the suction port of the second-stage compressing section 1B. It is to be noted that the refrigerant discharged from the compressor 1 and the radiator 2 is super-cooled by the refrigerant discharged from the intermediate-pressure heat sink 57 by means of the heat exchange in the cooling heat exchanger 32.

On the other hand, the refrigerant circulated from the branch point 9A to the second heat absorbing means 11 side exchanges heat with the refrigerant circulated on the side of the first heat absorbing means 10 as described above in the cooling heat exchanger 32, and the super-cooled refrigerant reaches the low-pressure expansion valve 66. Here, the pressure of the refrigerant is reduced to form the two-phase mixture of gas and liquid. Moreover, since the fan 58F is operated by the control unit 26, the refrigerant which has entered the low-pressure heat sink 58 evaporates in the heat sink 58 to absorb heat from the surrounding area. Thereafter, in the heat exchanger 15, the refrigerant exchanges heat with the refrigerant which is to enter the low-pressure expansion valve 66, and is warmed. The refrigerant returns to the suction port of the compressor 1. It is to be noted that after the refrigerant is super-cooled in the cooling heat exchanger 32 by means of the above-described heat exchange in the heat exchanger 15, the refrigerant flowing into the low-pressure expansion valve 66 via the branch point 9A is further cooled.

Next, the freezing and refrigerating operation will be described. It is to be noted that this freezing and refrigerating operation is an operation allowing the intermediate-pressure heat sink 57 and the low-pressure heat sink 58 at predetermined temperatures (e.g., the intermediate-pressure heat sink 57 around -5°C, the low-pressure heat sink 58 around -26°C) to cool the refrigerating room 21 and the freezing room 22.

Even in this case, when the compressor 1 is operated, the intermediate-pressure refrigerant compressed and discharged from the first-stage compressing section 1A is cooled by the intermediate cooling unit 1C. Thereafter, the refrigerant is further compressed and discharged from the second-stage compressing section 1B to radiate heat in the radiator 2, and is cooled. Thereafter, the refrigerant discharged from the radiator 2 reaches the branch point 9A via the cooling heat exchanger 32, and is branched here. A part of the refrigerant circulates in the first heat absorbing means 10, and the remaining refrigerant circulates in the second heat absorbing means 11. It is to be noted that the refrigerant discharged from the radiator 2 is super-cooled in the cooling heat exchanger 32, and reaches the branch point 9A in this state in the same manner as in the above-described freezing operation.

The pressure of the refrigerant circulated from the branch point 9A to the first heat absorbing means 10 is reduced by the intermediate-pressure expansion valve 65 to obtain the two-phase mixture of gas and liquid. Moreover, this refrigerant flows into the intermediate-pressure heat sink 57 in the form of the two-phase mixture. However, in the present freezing and refrigerating operation, the control unit 26 stops the fan 57F disposed in the vicinity of the intermediate-pressure heat sink 57 to thereby exert the heat absorbing function of the heat sink 57 unlike the above-described freezing operation.

Accordingly, the refrigerant discharged from the intermediate-pressure expansion valve 65 evaporates in the intermediate-pressure heat sink 57 to absorb heat from the surrounding area, and reaches the cooling heat exchanger 32. In the cooling heat exchanger 32, the refrigerant exchanges heat with the refrigerant discharged from the radiator 2, and is introduced into the suction port of the second-stage compressing section 1B in the form of the gas refrigerant.

On the other hand, the refrigerant circulated from the branch point 9A to the second heat absorbing means 11 side exchanges heat with the refrigerant circulated on the side of the first heat absorbing means 10 as described above in the cooling heat exchanger 32, and the super-cooled refrigerant reaches the low-pressure expansion valve 66. Here, the pressure of the refrigerant is reduced to obtain the two-phase mixture of gas and liquid. Moreover, in this case, since the fan 58F is operated by the control unit 26, the refrigerant which has entered the low-pressure heat sink 58 evaporates in the heat sink 58 to absorb heat from the surrounding area. Thereafter, the refrigerant passes through the heat exchanger 15, and returns to the suction port of the compressor 1.

The refrigerating operation will be described. It is to be noted that this refrigerating operation is an operation allowing the intermediate-pressure heat sink 57 to function at a predetermined temperature (e.g., around -5°C) and cool the refrigerating room 21. In the present refrigerating operation, the control unit 26 closes the low-pressure expansion valve 66 to interrupt refrigerant circulation from the branch point 9A to the second heat absorbing means 11 side, and the refrigerant is circulated on the first heat absorbing means 10 side only.

In this case, when the compressor 1 is operated, the refrigerant compressed and discharged from the second-stage compressing section 1B radiates heat, and is cooled in the radiator 2. Thereafter, the refrigerant discharged from the radiator 2 passes through the cooling heat exchanger 32 and the branch point 9A to circulate in the first heat absorbing means 10.

The pressure of the refrigerant circulated from the branch point 9A in the first heat absorbing means 10 is reduced by the intermediate-pressure expansion valve 65 to obtain the two-phase mixture (gas/liquid mixed state) of gas and liquid. Moreover, this refrigerant flows into the heat sink 57 in the form of the two-phase mixture, but in the present refrigerating operation, the fan 57F disposed in the vicinity of the intermediate-pressure heat sink 57 is operated by the control unit 26, thereby exerting the heat absorbing function of the heat sink 57.

Accordingly, the refrigerant discharged from the expansion valve 65 evaporates in the intermediate-pressure heat sink 57 to absorb heat from the surrounding area. Thereafter, the refrigerant reaches the cooling heat exchanger 32, and exchanges heat with the refrigerant discharged from the radiator 2 in the cooling heat exchanger 32. The refrigerant is thus warmed to form the gas refrigerant, and introduced into the suction port of the second-stage compressing section 1B. It is to be noted that the refrigerant discharged from the compressor 1 and the radiator 2 is super-cooled by the refrigerant discharged from the intermediate-pressure heat sink 57 by means of the heat exchange in the cooling heat exchanger 32 as described above.

In addition, in the present refrigerating operation, while the compressor 1 is operated, the circulation of the refrigerant from the branch point 9A to the second heat absorbing means 11 is interrupted to stop the cooling function of the second heat absorbing means 11. Therefore, a vacuum state is substantially brought from the low-pressure expansion valve 66 to the compression chamber of the first-stage compressing section 1A via the low-pressure heat sink 58. Accordingly, a large amount of oil flows into the compression chamber of the first-stage compressing section 1A to cause liquid compression, and a compressor efficiency largely deteriorates.

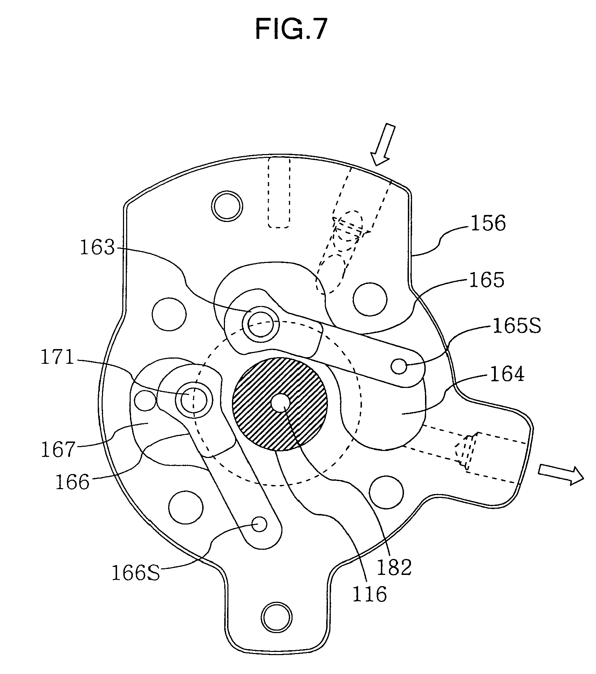

To solve the problem, in the compressor 1 of the present embodiment, the first-stage compressing section 1A is constituted as shown in FIG. 7 in order to inhibit the deterioration of the compressor efficiency due to the above-described liquid compression even in a case where the compression chamber of the first-stage compressing section 1A is substantially brought into the vacuum state during the present refrigerating operation. There will be described hereinafter the first-stage compressing section 1A in the compressor 1 of the present embodiment with reference to FIG. 7. It is to be noted that FIG. 7 is a plan view schematically showing the first-stage compressing section 1A of the compressor in the present embodiment.

The support member 156 of the first-stage compressing section 1A is provided with: the discharge noise absorbing chamber 164 for passing the refrigerant compressed in the first-stage compressing section 1A and discharged from the front-stage discharge port 163; and the front-stage discharge valve 165 which controls the circulation of the refrigerant to the discharge noise absorbing chamber 164.

Furthermore, the support member 156 includes: the oil discharge port 171 for discharging oil as a cause for the liquid compression from the compression chamber before the above-described liquid compression occurs in the compression chamber of the first-stage compressing section 1A; and the oil discharge chamber 167 which passes the oil discharged from this oil discharge port 171; and the oil discharge valve 166 which is constituted of a spring-leaf-like member and which controls the oil discharge to the oil discharge chamber 167.

An end portion of the front-stage discharge valve 165 on the side opposite to the front-stage discharge port 163 is fixed to the support member 156 via a valve support portion 165S. Accordingly, when the pressure of the refrigerant compressed in the compression chamber of the first-stage compressing section 1A becomes higher than a predetermined open pressure of the front-stage discharge valve 165 via the front-stage discharge port 163, the discharge valve 165 is opened using the valve support portion 165S as a point of support, and the refrigerant flows into the discharge noise absorbing chamber 164. Moreover, the refrigerant which has entered this discharge noise absorbing chamber 164 is discharged from the first-stage compressing section 1A.

On the other hand, an end portion of the oil discharge valve 166 on the side opposite to the oil discharge port 171 is fixed to the support member 156 via a valve support portion 166S. Moreover, as described above, the oil discharge chamber 167 communicates with the valve back pressure inflow tube 170 into which a high-pressure refrigerant flows. The refrigerant has been compressed in the second-stage compressing section 1B and discharged to the sealed container 112. Therefore, when the compressor 1 is driven, the pressure in the oil discharge chamber 167 is substantially equal to that of the refrigerant discharged from the second-stage compressing section 1B. The oil discharge valve 166 is closed by this high back pressure.

Accordingly, during the freezing operation and the freezing and refrigerating operation, the pressure of the refrigerant discharged from the second-stage compressing section 1B is higher than that of the refrigerant discharged from the first-stage compressing section 1A. Therefore, the oil discharge valve 166 is not opened, and the compressor 1 executes a usual two-stage compressing operation.

On the other hand, during the present refrigerating operation, in a case where the compression chamber of the first-stage compressing section 1A is substantially brought into a vacuum state, the liquid compression occurs, and the inside of the compression chamber is brought into an abnormally high pressure state, the oil discharge port 171 is opened, and the oil is discharged from the oil discharge port 171 into the oil discharge chamber 167. Accordingly, the above-described liquid compression is remarkably inhibited, and remarkable deterioration of the compressor efficiency can be prevented.

During all of the freezing operation, the freezing and refrigerating operation, and the refrigerating operation, the refrigerant circulates as described above to change its state, thereby forming the refrigerating cycle.

Here, in the present embodiment, since the carbon dioxide refrigerant is introduced into the refrigerant circuit, a dry degree of the refrigerant entering the expansion valves 65, 66 is excessively high in the refrigerant circuit for use in a conventional chlorofluorocarbon-based refrigerant or an HC-based refrigerant, that is, the refrigerant circuit in which the expansion valves 65, 66 are disposed immediately after the radiator 2 even in a case where the outside air temperature is about +22°C. Therefore, a ratio of the gas refrigerant in the refrigerant is high, and it is difficult to obtain a sufficient cooling performance.

To solve the problem, in the refrigerating device 30, the refrigerant pipe is branched from the branch point 9A, and one pipe is provided with the first heat absorbing means 10 as well as the cooling heat exchanger 32 to super-cool the refrigerant flowing into the first and second heat absorbing means 10 and 11 in the cooling heat exchanger 32. According to such constitution, a high cooling effect can be obtained even in a case where the carbon dioxide refrigerant having the above-described characteristics is used. In this case, the refrigerant discharged from the side of the first heat absorbing means 10 is introduced as the gas refrigerant into the suction port of the second-stage compressing section 1B. Therefore, a compression efficiency in the compressor 1 can be improved, and a refrigerating cycle efficiency of the refrigerating device 30 can further be improved.

Moreover, during the freezing operation, unlike the freezing and refrigerating operation, the control unit 26 stops the fan 57F disposed in the vicinity of the heat sink 57 to increase a heat exchange amount in the cooling heat exchanger 32. According to this constitution, it is possible to increase a super-cooling effect of the refrigerant flowing into the second heat absorbing means 11, and it is possible to perform a higher-efficiency freezing operation.

Furthermore, in the present embodiment, the refrigerating device 30 is constituted of the oil discharge port 171, the oil discharge valve 166 and the like in the first-stage compressing section 1A of the compressor 1. Therefore, even in a case where the compressor 1 as a multistage compressor is used, it is possible to inhibit the remarkable deterioration of the compressor efficiency due to the liquid compression in the first-stage compressing section 1A which is a front-stage compression element. It is possible to inhibit energy wasting, and the high-efficiency refrigerating operation is possible.

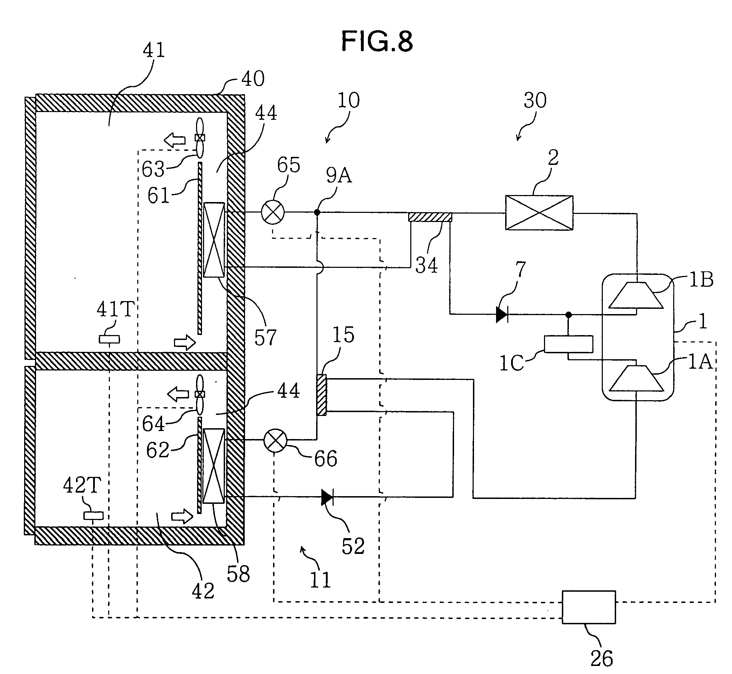

Next, there will be described an application example of the refrigerating device 30 to a refrigerator in the present embodiment with reference to FIG. 8. FIG. 8 shows a schematic constitution diagram of the refrigerator provided with the refrigerating device 30.

A refrigerator 40 is constituted of: a refrigerating room 41 disposed in an upper stage; and a freezing room 42 disposed in a lower stage. Moreover, refrigerator partition walls 61, 62 are disposed in inner parts of the respective rooms 41, 42, and there are arranged the intermediate-pressure heat sink 57, the low-pressure heat sink 58, and the fans 63, 64 in air paths 44 defined by the refrigerator partition walls 61, 62. Moreover, the freezing room 42 is provided with a temperature sensor 42T, and the refrigerating room 41 is provided with a temperature sensor 41T.

Furthermore, during each above-described operation, that is, during the freezing operation, the fan 64 is operated. During the freezing and refrigerating operation, the fans 63, 64 are operated. Further during the refrigerating operation, the fan 63 is operated. This can cool the respective rooms 41, 42.

In the present embodiment, since the refrigerator 40 is provided with the above-described constitution, a high cooling performance and a high-efficiency operation are possible even in a case where carbon dioxide is used in the refrigerant. Even during the refrigerating operation, it is possible to inhibit the liquid compression in the first-stage compressing section 1A of the compressor 1, and the refrigerating cycle efficiency can be improved.

The present invention has been described above in accordance with the embodiment, but the present invention is not limited to this embodiment, and various modifications are possible. For example, the carbon dioxide refrigerant is introduced into the refrigerant circuit in the above-described embodiment, but the present invention is not limited to the embodiment, and is applicable to another embodiment in which a chlorofluorocarbon-based refrigerant is introduced.

Moreover, the expansion valves 65 and 66 of the above-described embodiment may be changed to capillary tubes if necessary.

### (Embodiment 4)

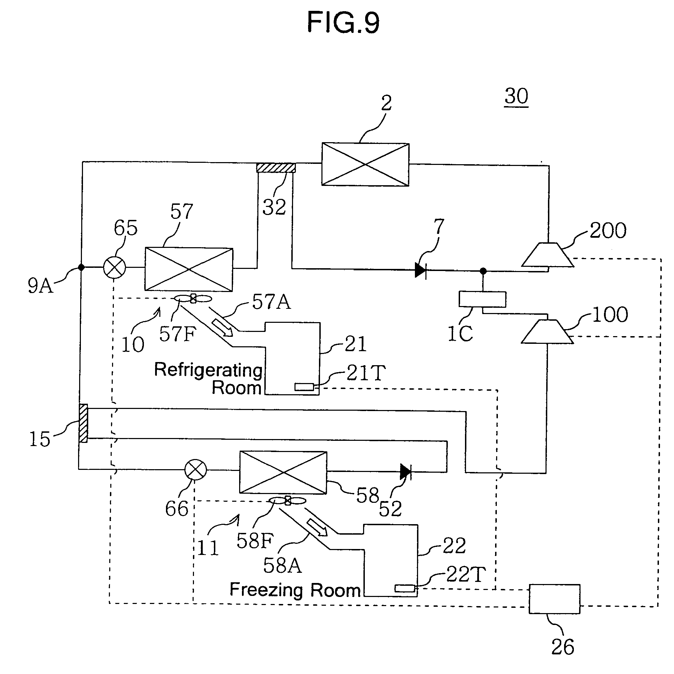

Next, Embodiment 4 of the present invention will be described in detail with reference to the drawings. FIG. 9 shows a refrigerant circuit diagram of a refrigerating device in the present embodiment. A refrigerating device 30 is provided with: a compressor 100 as a front-stage compression element; a compressor 200 as a rear-stage compression element connected in series to the discharge side of this compressor 100; a radiator 2 connected to the discharge side of this compressor 200; first heat absorbing means 10 and second heat absorbing means 11 connected to an outlet side of this radiator 2; and a cooling heat exchanger 32. An outlet side of the first heat absorbing means 10 is connected to a suction port of the compressor 200, and an outlet side of the second heat absorbing means 11 is connected to a suction port of the compressor 100 to constitute a refrigerating cycle.

Moreover, the refrigerating device 30 is provided with: a check valve 7 disposed between the first heat absorbing means 10 and an intermediate-pressure portion of the compressor 1; a check valve 52 and a heat exchanger 15 disposed between the second heat absorbing means 11 and the suction port of the compressor 100; and a control unit 26. The heat exchanger 15 is constituted in such a manner that heat can be exchanged between a refrigerant discharged from the second heat absorbing means and a refrigerant which is to enter a low-pressure expansion valve 65.

The first heat absorbing means 10 includes the intermediate-pressure expansion valve 65 in which the refrigerant from a branch point 9A circulates, and an intermediate-pressure heat sink 57. The second heat absorbing means 11 includes a low-pressure expansion valve 66 in which the refrigerant from the branch point 9A circulates, and a low-pressure heat sink 58. Moreover, the first heat absorbing means 10 and the second heat absorbing means 11 function in different temperature zones, a refrigerant pipe from the radiator 2 is branched at the branch point 9A, one pipe is connected to the first heat absorbing means 10, and the other pipe is connected to the second heat absorbing means 11.

The intermediate-pressure expansion valve 65 and the low-pressure expansion valve 66 are constituted in such a manner that a throttle degree is variable. This throttle degree is changed to lower a refrigerant pressure to a predetermined pressure before the refrigerant reaches the heat sinks 57, 58, and it is possible to control an evaporation temperature of the refrigerant in the heat sinks 57, 58.

The cooling heat exchanger 32 is disposed in order to exchange heat between the refrigerant discharged from the radiator 2 and the refrigerant discharged from the intermediate-pressure heat sink 57. After the refrigerant discharged from the intermediate-pressure heat sink 57 is discharged from the cooling heat exchanger 32, the refrigerant is introduced into the suction port of the compressor 200 via the check valve 7.

It is to be noted that since the expansion valve 65 is constituted so that the throttle degree is variable as described above, the throttle degree of this intermediate-pressure expansion valve 65 is changed to lower, to a predetermined pressure, a pressure of the refrigerant circulated from the branch point 9A to the intermediate-pressure expansion valve 65 before the refrigerant reaches the intermediate-pressure heat sink 57. Moreover, the refrigerant discharged from the intermediate-pressure expansion valve 65 evaporates in the intermediate-pressure heat sink 57 to absorb heat from a surrounding area of the heat sink 57. Thereafter, the refrigerant exchanges heat with the refrigerant discharged from the radiator 2, and is warmed in the cooling heat exchanger 32. Thereafter, the refrigerant is returned to the suction port of the compressor 200.

The compressor 100 is connected in series to the compressor 200 as described above. An intermediate cooling unit 1C is disposed in a refrigerant pipe which connects the discharge port of the compressor 100 to the suction port of the compressor 100. It is to be noted that the gas refrigerant discharged from the first heat absorbing means 10 and passed through the cooling heat exchanger 32 is introduced between the intermediate cooling unit 1C and the compressor 200.

Further in the refrigerating device 30 of the present embodiment, cold air passed through the intermediate heat sink 57 is fed to a refrigerating room 21 via a duct 57A by means of a fan 57F disposed in the vicinity of the heat sink 57, and cold air passed through the low-pressure heat sink 58 is fed to a freezing room 22 via a duct 58A by means of a fan 58F disposed in the vicinity of the heat sink 58.

The control unit 26 is control means for controlling operation frequencies or ON-OFF states of the compressors 100, 200, open degrees of the expansion valves 65 and 66, ON-OFF states of the fans 57F and 58F and the like based on information of temperature sensors 21T and 22T disposed in the refrigerating room 21 and the freezing room 22, respectively. The unit is constituted of a general-purpose microcomputer.

It is to be noted that in the present embodiment, in FIG. 9, a high-pressure part of a refrigerating cycle of the refrigerating device 30 is operated which corresponds to a part from the discharge side of the compressor 200 to inlets to the intermediate-pressure expansion valve 65 and the low-pressure expansion valve 66 via the radiator 2 and the cooling heat exchanger 32. An intermediate-pressure part of the refrigerating cycle of the refrigerating device 30 is operated which corresponds to a part from the discharge side of the compressor 100 to the suction port of the compressor 200 via the intermediate cooling unit 1C, and the outlet of the intermediate-pressure expansion valve 65 to the suction port of the compressor 200 via the intermediate-pressure heat sink 57 and the cooling heat exchanger 32. Moreover, a low-pressure part of the refrigerating cycle of the refrigerating device 30 is operated which corresponds to a part from the outlet of the low-pressure expansion valve 66 to the suction port of the compressor 100 via the low-pressure heat sink 58 and the heat exchanger 15.

Here, in the refrigerating device 30 of the present embodiment, as the refrigerant, there is used a carbon dioxide refrigerant (CO₂) which is a natural refrigerant having a small environmental load in consideration of flammability, toxicity and the like. As oil which is a lubricant of the compressor 200, there is used, for example, mineral oil, alkyl benzene oil, ether oil, polyalkylene glycol (PAG), polyol ester (POE) or the like.

Since carbon dioxide is used as the refrigerant in the refrigerating device 30 in this manner, the high pressure part of the refrigerating cycle is brought into a supercritical state in the refrigerating device 30 in a case where an outside air temperature is not less than a critical temperature (about +31°C) of carbon dioxide. Accordingly, the refrigerating device 30 is operated as a transfer critical cycle.

There will be described an operation of the refrigerating device 30 constituted as described above in the present embodiment with reference to FIG. 9. The control unit 26 selectively allows the refrigerating device 30 to perform the freezing operation mainly allowing the second heat absorbing means 11 to function, the freezing and refrigerating operation allowing the first heat absorbing means 10 and the second heat absorbing means 11 to perform freezing and refrigerating, and the refrigerating operation mainly allowing the first heat absorbing means 10 to function.

First, the freezing operation will be described. It is to be noted that this freezing operation is an operation allowing the low-pressure heat sink 58 to function at a predetermined temperature (e.g., around -26°C) and cool the freezing room 22.

In the refrigerating device 30 of the present embodiment, when the compressors 100, 200 are operated, the intermediate-pressure refrigerant compressed and discharged from the compressor 100 is further compressed and discharged from the compressor 200. The refrigerant radiates heat in the radiator 2, and is cooled. Thereafter, the refrigerant discharged from the radiator 2 reaches the branch point 9A via the cooling heat exchanger 32, and is branched at the point. A part of the refrigerant circulates to the first heat absorbing means 10, and the remaining refrigerant circulates to the second heat absorbing means 11. It is to be noted that the refrigerant discharged from the radiator 2 is super-cooled by the cooling heat exchanger 32 to reach the branch point 9A in this state. Details will be described later.

A pressure of the refrigerant circulated from the branch point 9A to the first heat absorbing means 10 is reduced by the intermediate-pressure expansion valve 65 to obtain a two-phase mixture (gas/liquid mixed state) of gas and liquid. Moreover, this refrigerant flows into the intermediate-pressure heat sink 57 in the form of the two-phase mixture. However, in the present freezing operation, the control unit 26 stops the fan 57F disposed in the vicinity of the intermediate-pressure heat sink 57 to thereby substantially stop the heat absorbing function of the heat sink 57. Accordingly, the refrigerant discharged from the intermediate-pressure expansion valve 65 hardly absorbs heat from the surrounding area in the intermediate-pressure heat sink 57, and reaches the cooling heat exchanger 32. In the cooling heat exchanger 32, the refrigerant exchanges heat with the refrigerant discharged from the radiator 2, and is warmed to form the gas refrigerant. The refrigerant is introduced into the suction port of the compressor 200. It is to be noted that the refrigerant discharged from the compressor 200 and the radiator 2 is super-cooled by the refrigerant discharged from the intermediate-pressure heat sink 57 by means of the heat exchange in the cooling heat exchanger 32.

On the other hand, the refrigerant circulated from the branch point 9A to the second heat absorbing means 11 side exchanges heat with the refrigerant circulated on the side of the first heat absorbing means 10 as described above in the cooling heat exchanger 32, and the super-cooled refrigerant reaches the low-pressure expansion valve 66. The pressure of the refrigerant is reduced to obtain the two-phase mixture of gas and liquid. Moreover, since the fan 58F is operated by the control unit 26, the refrigerant which has entered the low-pressure heat sink 58 evaporates in the heat sink 58 to absorb heat from the surrounding area. Thereafter, in the heat exchanger 15, the refrigerant exchanges heat with the refrigerant which is to enter the low-pressure expansion valve 66, and is warmed. The refrigerant returns to the suction port of the compressor 100. It is to be noted that after the refrigerant is super-cooled in the cooling heat exchanger 32 by means of the above-described heat exchange in the heat exchanger 15, the refrigerant flowing into the low-pressure expansion valve 66 via the branch point 9A is further cooled.

Next, the freezing and refrigerating operation will be described. It is to be noted that this freezing and refrigerating operation is an operation allowing the intermediate-pressure heat sink 57 and the low-pressure heat sink 58 at predetermined temperatures (e.g., the intermediate-pressure heat sink 57 around -5°C, the low-pressure heat sink 58 around -26°C) to cool the refrigerating room 21 and the freezing room 22.

Even in this case, when the compressors 100, 200 are operated, the intermediate-pressure refrigerant compressed and discharged from the compressor 100 is further compressed and discharged from the compressor 200. The refrigerant radiates heat, and is cooled in the radiator 2. Thereafter, the refrigerant discharged from the radiator 2 reaches the branch point 9A via the cooling heat exchanger 32, and is branched here. A part of the refrigerant circulates in the first heat absorbing means 10, and the remaining refrigerant circulates in the second heat absorbing means 11. It is to be noted that the refrigerant discharged from the radiator 2 is super-cooled in the cooling heat exchanger 32, and reaches the branch point 9A in this state in the same manner as in the above-described freezing operation. Details will be described later.

The pressure of the refrigerant circulated from the branch point 9A to the first heat absorbing means 10 is reduced by the intermediate-pressure expansion valve 65 to obtain the two-phase mixture of gas and liquid. Moreover, this refrigerant flows into the intermediate-pressure heat sink 57 in the form of the two-phase mixture. However, in the present freezing and refrigerating operation, unlike the freezing operation, the control unit 26 operates the fan 57F disposed in the vicinity of the intermediate-pressure heat sink 57 to thereby exert the heat absorbing function of the intermediate-pressure heat sink 57. Accordingly, the refrigerant discharged from the intermediate-pressure expansion valve 65 evaporates in the intermediate-pressure heat sink 57 to absorb heat from the surrounding area, and reaches the cooling heat exchanger 32. In the cooling heat exchanger 32, the refrigerant exchanges heat with the refrigerant discharged from the radiator 2, and is warmed. The refrigerant is introduced into the suction port of the compressor 200 in the form of the gas refrigerant.

It is to be noted that the refrigerant is discharged from the compressor 200 and the radiator 2, and super-cooled by the refrigerant discharged from the intermediate-pressure heat sink 57 by means of the heat exchange in the cooling heat exchanger 32. However, in the present freezing and refrigerating operation, unlike the freezing operation, since the heat absorbing function of the intermediate-pressure heat sink 57 is exerted, a heat exchange amount in the cooling heat exchanger 32 is smaller than that during the freezing operation.

On the other hand, the refrigerant circulated from the branch point 9A to the second heat absorbing means 11 side exchanges heat with the refrigerant circulated on the side of the first heat absorbing means 10 as described above in the cooling heat exchanger 32, and the super-cooled refrigerant reaches the low-pressure expansion valve 66. The pressure of the refrigerant is reduced to obtain the two-phase mixture of gas and liquid. Moreover, in this case, since the fan 58F is operated by the control unit 26, the refrigerant which has entered the low-pressure heat sink 58 evaporates in the heat sink 58 to absorb heat from the surrounding area. Thereafter, the refrigerant passes through the heat exchanger 15, and returns to the suction port of the compressor 100.

Furthermore, the refrigerating operation will be described. It is to be noted that this refrigerating operation is an operation allowing the intermediate-pressure heat sink 57 to function at a predetermined temperature (e.g., around -5°C) and cool the refrigerating room 21. In the present refrigerating operation, the control unit 26 closes the low-pressure expansion valve 66 to interrupt refrigerant circulation from the branch point 9A to the second heat absorbing means 11 side, and the refrigerant is circulated on the first heat absorbing means 10 side only.

It is to be noted that in the present refrigerating operation, since the second heat absorbing means 11 does not function, energy is wasted even if the compressor 100 is operated. When both of the compressors 100 and 200 are operated in the same manner as in the freezing operation and the freezing and refrigerating operation, a vacuum state is substantially brought from the expansion valve 66 to the suction port of the compressor 100 via the low-pressure heat sink 58, because the low-pressure expansion valve 66 is closed. Therefore, the compressor 100 sucks a large amount of oil to cause oil compression, and the compressor efficiency remarkably deteriorates.

To solve the problem, it is assumed that the compressor 100 is stopped by the control unit 26 in the refrigerating operation of the present embodiment.

In this case, when the compressor 200 is operated, the refrigerant compressed and discharged from the compressor 200 radiates heat, and is cooled in the radiator 2. Thereafter, the refrigerant discharged from the radiator 2 passes through the cooling heat exchanger 32 and the branch point 9A to circulate in the first heat absorbing means 10.

The pressure of the refrigerant circulated from the branch point 9A in the first heat absorbing means 10 is reduced by the intermediate-pressure expansion valve 65 to obtain the two-phase mixture (gas/liquid mixed state) of gas and liquid. Moreover, this refrigerant flows into the intermediate-pressure heat sink 57 in the form of the two-phase mixture, but in the present refrigerating operation, the fan 57F disposed in the vicinity of the intermediate-pressure heat sink 57 is operated by the control unit 26, thereby exerting the heat absorbing function of the heat sink 57.

Accordingly, the refrigerant discharged from the intermediate-pressure expansion valve 65 evaporates in the intermediate-pressure heat sink 57 to absorb heat from the surrounding area. Thereafter, the refrigerant reaches the cooling heat exchanger 32, and exchanges heat with the refrigerant discharged from the radiator 2 in the cooling heat exchanger 32. The refrigerant is thus warmed to form the gas refrigerant, and introduced into the suction port of the compressor 200. It is to be noted that the refrigerant discharged from the compressor 200 and the radiator 2 is super-cooled by the refrigerant discharged from the intermediate-pressure heat sink 57 by means of the heat exchange in the cooling heat exchanger 32 as described above.

As described above, since the compressor 100 is stopped in the present refrigerating operation, energy wasting can be inhibited, and a high-efficiency refrigerating operation is possible.

During all of the freezing operation, the freezing and refrigerating operation, and the refrigerating operation, the refrigerant circulates as described above to change its state, thereby forming the refrigerating cycle.

Here, in the present embodiment, since the carbon dioxide refrigerant is introduced into the refrigerant circuit, a dry degree of the refrigerant entering the expansion valves 65, 66 is excessively high in the refrigerant circuit for use in a conventional chlorofluorocarbon-based refrigerant or an HC-based refrigerant, that is, the refrigerant circuit in which the expansion valves 65, 66 are disposed immediately after the radiator 2 even in a case where the outside air temperature is about +22°C. Therefore, a ratio of the gas refrigerant in the refrigerant is high, and it is difficult to obtain a sufficient cooling performance.

To solve the problem, in the refrigerating device 30, the refrigerant pipe is branched from the branch point 9A, and one pipe is provided with the first heat absorbing means 10 as well as the cooling heat exchanger 32 to super-cool the refrigerant flowing into the first and second heat absorbing means 10 and 11 in the cooling heat exchanger 32. According to such constitution, a high cooling effect can be obtained even in a case where the carbon dioxide refrigerant having the above-described characteristics is used. In this case, the refrigerant discharged from the side of the first heat absorbing means 10 is introduced as the gas refrigerant into the suction port of the compressor 200. Therefore, compression efficiencies in the compressors 100, 200 can be improved, and a refrigerating cycle efficiency of the refrigerating device 30 can further be improved.

Moreover, during the freezing operation, unlike the freezing and refrigerating operation, the control unit 26 stops the fan 57F disposed in the vicinity of the intermediate-pressure heat sink 57 to increase a heat exchange amount in the cooling heat exchanger 32. According to this constitution, it is possible to increase a super-cooling effect of the refrigerant flowing into the second heat absorbing means 11, and it is possible to perform a higher-efficiency freezing operation.

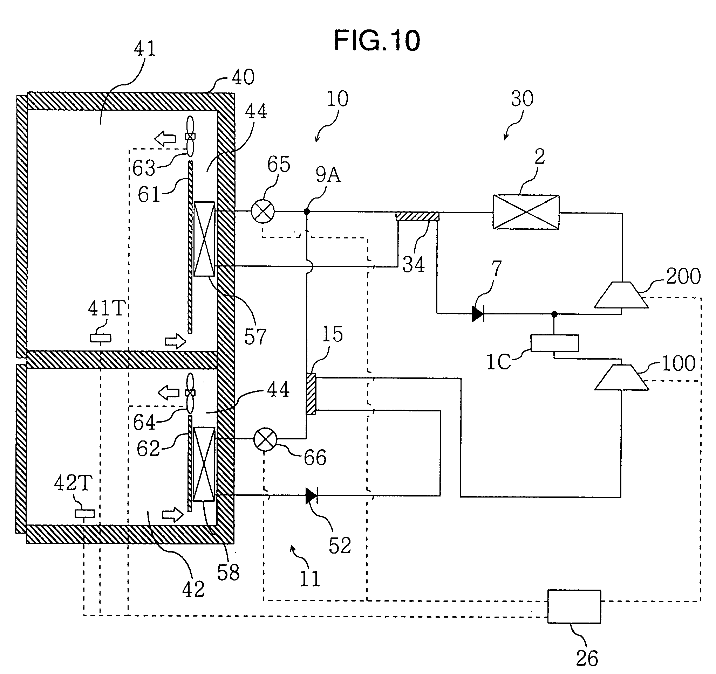

Next, there will be described an application example of the refrigerating device 30 to a refrigerator in the present embodiment with reference to FIG. 10. FIG. 10 shows a schematic constitution diagram of the refrigerator provided with the refrigerating device 30.

A refrigerator 40 is constituted of: a refrigerating room 41 disposed in an upper stage; and a freezing room 42 disposed in a lower stage. Moreover, refrigerator partition walls 61, 62 are disposed in inner parts of the respective rooms 41, 42, and there are arranged the intermediate-pressure heat sink 57, the low-pressure heat sink 58, and the fans 63, 64 in air paths 44 defined by the refrigerator partition walls 61, 62. Moreover, the freezing room 42 is provided with a temperature sensor 42T, and the refrigerating room 41 is provided with a temperature sensor 41T.

Furthermore, during each above-described operation, that is, during the freezing operation, the fan 64 is operated. During the freezing and refrigerating operation, the fans 63, 64 are operated. Further during the refrigerating operation, the fan 63 is operated. This can cool the respective rooms 41, 42.

In the present embodiment, since the refrigerator 40 is provided with the above-described constitution, a high cooling performance and a high-efficiency operation are possible even in a case where carbon dioxide is used in the refrigerant. During the refrigerating operation, since the compressor 100 is stopped, the refrigerating cycle efficiency can further be improved.

### (Embodiment 5)

Next, another embodiment of the present invention will be described with reference to FIG. 11. FIG. 11 shows a refrigerant circuit diagram of a refrigerating device 50 in the present embodiment. In the present embodiment, the refrigerating device 50 is different from the refrigerating device 30 in that one compressor is disposed and this compressor 1 is constituted of a multistage compressor.

The compressor 1 is a two-stage compressor including a first-stage compressing section 1A and a second-stage compressing section 1B in a sealed container. An intermediate cooling unit 1C is disposed in a refrigerant pipe of the first-stage compressing section 1A on a discharge side. That is, in the present embodiment, the first-stage compressing section 1A performs a function of a compressor 100 as a front-stage compression element of Embodiment 4, and the second-stage compressing section 1B performs a function of a compressor 200 as a rear-stage compression element.

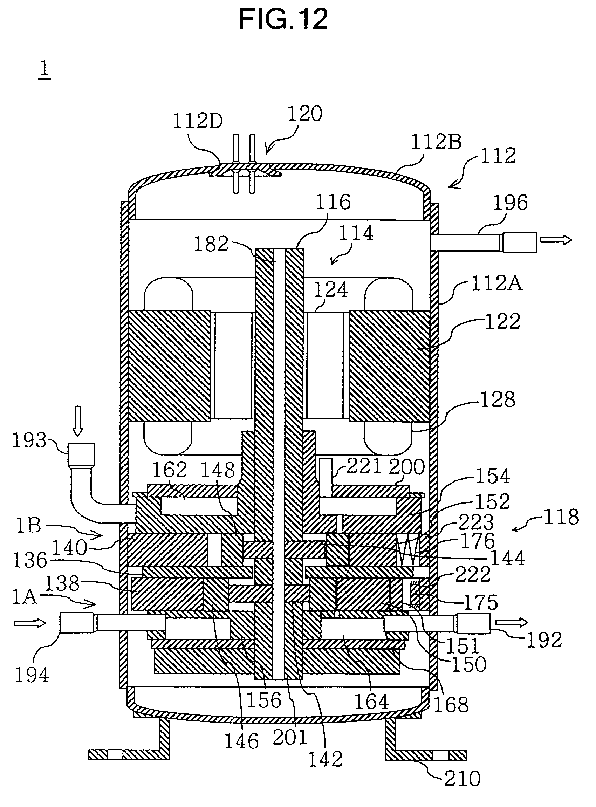

Here, the compressor 1 of the present embodiment will be described with reference to FIG. 12. FIG. 12 is a schematic sectional view of the compressor 1.

The compressor 1 is a high inner pressure type two-stage compression system rotary compressor. The compressor 1 is provided with a sealed container 112 whose upper and lower ends are both sealed and which substantially has a vertically long cylindrical shape. A bottom portion of this sealed container 112 is constituted as an oil reservoir. The sealed container 112 includes: an electromotive element 114; and a rotary compressing section 118 constituted of the first compressing section 1A and the second compressing section 1B driven via a rotation shaft 116 of the electromotive element 114, and an outer face of a bottom of the container is provided with leg portions 210 for fixing the compressor 1 to, for example, a refrigerator housing (not shown).

The sealed container 112 is constituted of: a container main body 112A which stores the electromotive element 114 and the rotary compressing section 118; and a substantially bowl-shaped end cap (lid member) 112B which closes an end portion of this container main body 112A on the side of the electromotive element 114. A circular attachment hole 112D is formed in this end cap 112B, and a terminal 120 (wiring line is omitted) for supplying power to the electromotive element 114 is attached to the attachment hole 112D.

The electromotive element 114 is constituted of: a stator 122 annularly attached along an inner peripheral face of the sealed container 112; and a rotor 124 inserted in the electromotive element and internally disposed at a slight interval from the inner peripheral face of this stator 122. This rotor 124 is fixed to the rotation shaft 116 which passes through the center and which extends in an axial center direction of the sealed container 112. Here, the stator 122 has: a laminate (not shown) constituted of laminated donut-shaped electromagnetic steel plates; and a stator coil 128 wound around a tooth portion of this laminate by a direct winding method. Moreover, the rotor 124 is formed of a laminate of electromagnetic steel plates in the same manner as in the stator 122. The rotor is formed by inserting a permanent magnet in this laminate.

Moreover, in the rotation shaft 116, an oil passage 182 extends through the axial center of the shaft in a perpendicular direction. One end of this oil passage 182 on the side of the rotary compressing section 118 opens to the oil reservoir which is the bottom portion of the sealed container 112. The other end of the passage on the side of the electromotive element 114 opens on the side of the end cap 112B. It is to be noted that this oil passage 182 communicates with sliding portions of the respective stage compressing sections 1A, 1B, and is constituted so that oil can be supplied to the compressing sections 1A, 1B.

The first-stage compressing section 1A and the second-stage compressing section 1B of the rotary compressing section 118 are constituted of first and second cylinders 138, 140, and an intermediate partition plate 136 is sandwiched between these cylinders 138 and 140. The respective stage compressing sections 1A, 1B are constituted of: first and second rollers 146, 148 which are fitted into the first and second cylinders 138, 140 disposed on opposite sides (upper and lower sides in FIG. 12) of the intermediate partition plate 136 and first and second eccentric sections 142, 144 disposed on the rotation shaft 116 and having a phase difference of 180 degrees and which eccentrically rotate in the first and second cylinders 138, 140; first and second vanes 150, 152 which abut on these rollers 146, 148, respectively, to define low-pressure and high-pressure chamber sides in the cylinders 138, 140; and support members 154, 156 which close an open face of the cylinder 140 on the side of the electromotive element 114 and an open face of the cylinder 138 on the side opposite to the electromotive element 114 and which also function as bearings of the rotation shaft 116.

In the second-stage compressing section 1B, in the outside of the second vane 152 (right side in FIG. 12), there is disposed a spring 176 which abuts on an outer end portion of the second vane 152 to urge the second vane 152 toward the roller 148. Furthermore, a plug 223 made of a metal is disposed on the sealed container 112 side of the spring 176, and prevents the spring 176 from being detached. A back pressure chamber (not shown) is constituted in the second vane 152, and a pressure on the side of the high-pressure chamber of the cylinder 140 is applied as a back pressure to this back pressure chamber.

On the other hand, in the first-stage compressing section 1A, a magnet 151 constituted of, for example, a permanent magnet is attached to an outer end portion of the vane 150 on the side opposite to the roller 146. A plug 222 is disposed so as to face the plug 222 disposed in the second-stage compressing section 1B, and an electromagnet 175 is disposed on the magnet 151 side of the plug 222.

Moreover, the support members 154, 156 are provided with discharge noise absorbing chambers 162, 164 formed by partially depressing the members and closing the depressed portions with a baffle plate 200 and a cover 168, respectively, as described later. That is, the discharge noise absorbing chamber 162 is formed by closing the depressed portion of the support member 154 with the baffle plate 200, and the discharge noise absorbing chamber 164 is formed by closing the depressed portion of the support member 156 with the cover 168.

The discharge noise absorbing chamber 162 communicates with the sealed container 112 via a discharge pipeline 221 extending through the baffle plate 200 to open on the side of the electromotive element 114. The high-pressure refrigerant gas compressed in the second-stage compressing section 1B is discharged toward the electromotive element 114 in the sealed container 112 via the discharge pipeline 221. In this case, the refrigerant gas is mixed with the oil supplied to the second-stage compressing section 1B, but this oil is also discharged toward the electromotive element 114 in the sealed container 112. Moreover, the oil mixed in the refrigerant gas is separated from the refrigerant gas, and stored in the oil reservoir which is the bottom portion of the sealed container 112.

Moreover, the sealed container 112 is connected to: a refrigerant introducing tube 194 for introducing the refrigerant gas into the first-stage compressing section 1A; an intermediate refrigerant discharge tube 192 which discharges, to the outside of the sealed container 112, the refrigerant gas compressed in the first-stage compressing section 1A to obtain an intermediate pressure; an intermediate refrigerant introducing tube 193 which introduces the intermediate-pressure refrigerant discharged from the intermediate refrigerant discharge tube 192 into the second-stage compressing section 1B via the intermediate cooling unit 1C as described above; and a refrigerant discharge tube 196 for discharging, from the compressor 1, the refrigerant gas compressed in the second-stage compressing section 1B under the high pressure and discharged into the sealed container 112 via the discharge pipeline 221 as described above. The connected tubes are inserted in the sealed container.

Even in the present embodiment, there are selectively performed a freezing operation, a freezing and refrigerating operation, and a refrigerating operation in the same manner as in Embodiment 4.

First, the freezing operation will be described. When the compressor 1 is operated during the freezing operation, the intermediate-pressure refrigerant compressed and discharged from the first-stage compressing section 1A is further compressed and discharged from the second-stage compressing section 1B to radiate heat in the radiator 2, and the refrigerant is cooled. Thereafter, in the refrigerating device 50, there is formed a refrigerating cycle similar to that during the freezing operation of Embodiment 4, and the freezing room 22 is cooled.

Next, the freezing and refrigerating operation will be described. Even during the freezing and refrigerating operation, when the compressor 1 is operated in the same manner as in the freezing operation, the intermediate-pressure refrigerant compressed and discharged from the first-stage compressing section 1A is further compressed and discharged from the second-stage compressing section 1B to radiate heat in the radiator 2, and the refrigerant is cooled. Thereafter, in the refrigerating device 50, there is formed a refrigerating cycle similar to that during the freezing and refrigerating operation of Embodiment 4, and the respective rooms 21, 22 are cooled.

Furthermore, the refrigerating operation will be described. In Embodiment 4, the control unit 26 stops the compressor 100 as the front-stage compression element in two compressors 100, 200 in order to inhibit energy wasting and deterioration of a compressor efficiency during the refrigerating operation. However, in the compressor 1 of the present embodiment, the first-stage compressing section 1A and the second-stage compressing section 1B are connected to each other via the same rotation shaft 116. Therefore, it is difficult to stop the only first-stage compressing section 1A which is the front-stage compression element during the refrigerating operation.

To solve the problem, in order to make possible a single-stage operation during the refrigerating operation, that is, the refrigerant compressing operation by the second-stage compressing section 1B only, the magnet 151 is attached to the outer end face of the vane 150 on the side opposite to the roller 146, and the electromagnet 175 is disposed on the side of the sealed container 112 so as to face the magnet. This constitution realizes the single-stage operation as described above.

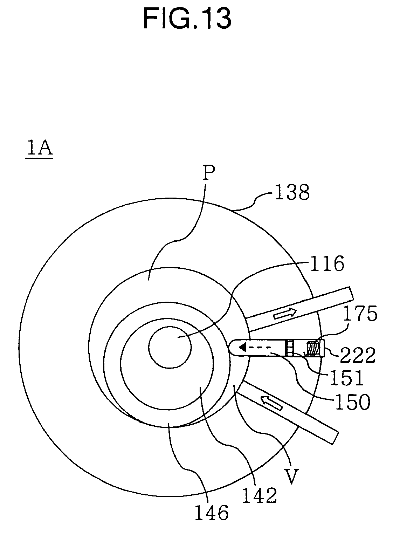

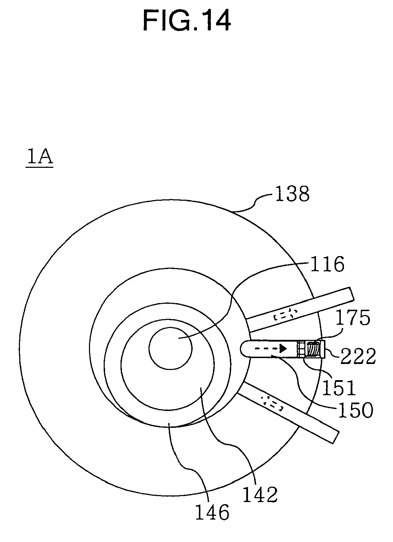

Here, there will be described the single-stage operation of the compressor 1 in the present embodiment with reference to FIGS. 13 and 14.

FIGS. 13 and 14 are schematic diagrams showing a compression mechanism constituted of the vane 150 and the roller 146 in the first-stage compressing section 1A. It is to be noted that FIG. 13 shows the first-stage compressing section 1A during a multi-stage operation, that is, during the freezing operation and the freezing and refrigerating operation, and FIG. 14 shows the first-stage compressing section 1A during the single-stage operation, that is, the refrigerating operation.

In FIG. 13, the vane 150 abuts on the roller 146 to define a compression chamber P and a suction chamber V in a crescent-shaped space formed between the roller 146 and the cylinder 138.

As described above, the vane 150 is attached to the outer end face of the vane 150 on the side opposite to the roller 146. Moreover, when the compressor 1 is operated in multiple stages as shown in FIG. 13, the control unit 26 energizes the electromagnet 175 in such a manner that the electromagnet reacts against the magnet 151. Accordingly, the vane 150 is pressed onto the roller 146 owing to repulsive forces of the magnet 151 and the electromagnet 175. In consequence, the first-stage compressing section 1A functions as the front-stage compression element, and the compressor 1 is operated in the multiple stages.

On the other hand, during the single-stage operation, as shown in FIG. 14, the control unit 26 energizes the electromagnet 175 in such a manner that the electromagnet attracts the magnet 151. Accordingly, the vane 150 is attracted by the magnet 151 as well as the electromagnet 175, and the vane 150 does not abut on the roller 146. In consequence, the compression chamber P and the suction chamber V shown in FIG. 13 are not formed, the first-stage compressing section 1A does not function as the front-stage compression element, and the compressor 1 is operated in the single stage.

As described above in detail, in the present embodiment, the refrigerating device 50 is constituted so as to dispose the magnet 151 and the electromagnet 175 in the first-stage compressing section 1A of the compressor 1. According to this constitution, even in a case where the compressor 1 as the multistage compressor is used, it is possible to stop the compressing operation of the first-stage compressing section 1A which is the front-stage compression element during the refrigerating operation, energy wasting can be inhibited, and a high-efficiency refrigerating operation is possible.

Moreover, in the present embodiment, unlike Embodiment 4, the compressor can be constituted of one unit, and it is possible to save space of the refrigerating device 50.

It is to be noted that needless to say, the refrigerating device 50 is also applicable to a refrigerator in the same manner as in the refrigerating device 30 of Embodiment 4.

### (Embodiment 6)

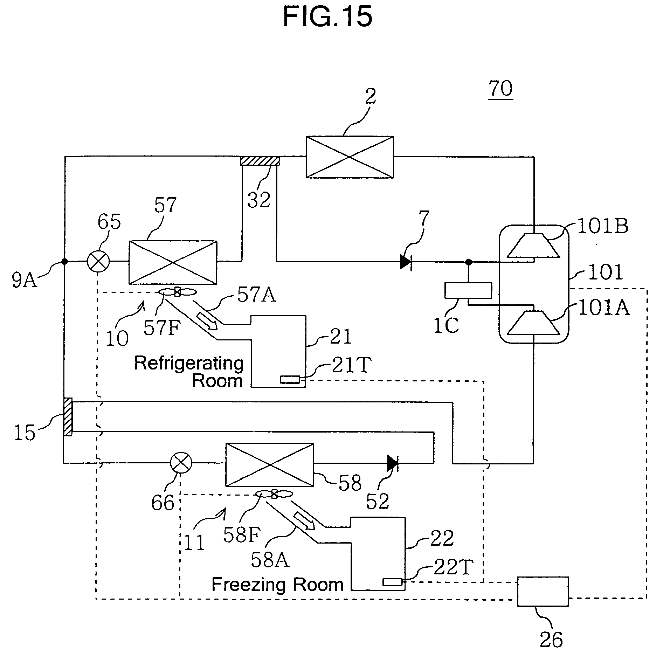

Next, there will be described still another embodiment of the present invention with reference to FIG. 15. FIG. 15 shows a refrigerant circuit diagram of a refrigerating device 70 in the present embodiment. The refrigerating device 70 of the present embodiment is different from the refrigerating device 50 of Embodiment 5 in that a compressor 101 is disposed instead of the compressor 1.

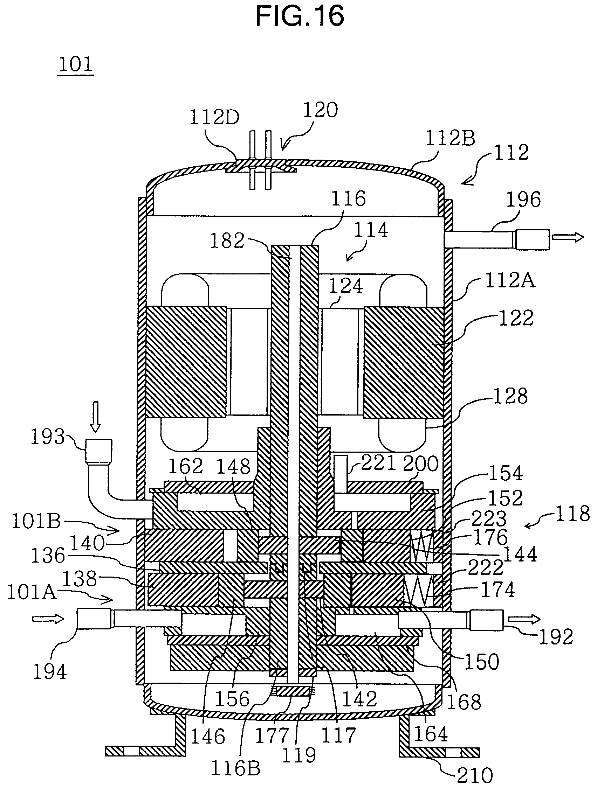

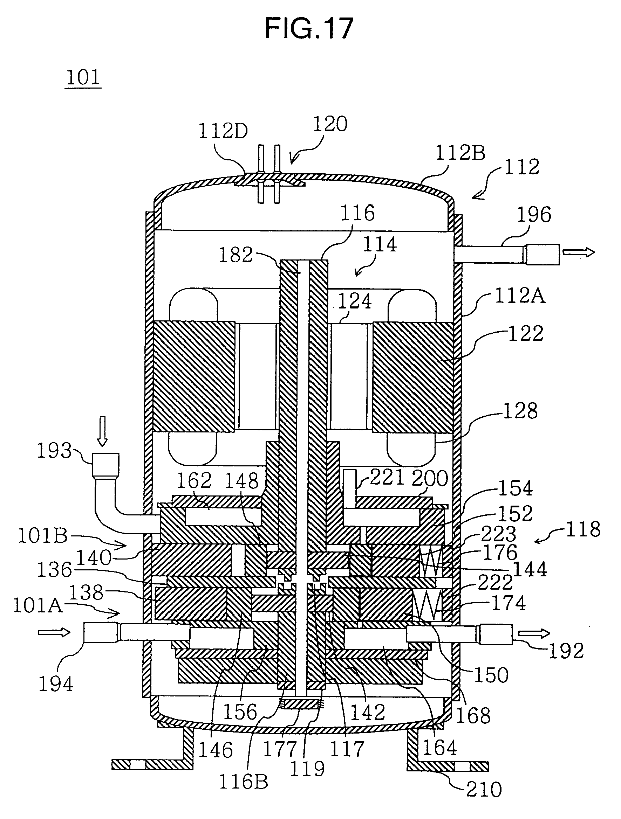

The compressor 101 will be described with reference to FIGS. 16 and 17. FIGS. 16 and 17 are schematic sectional views of the compressor 101. It is to be noted that FIG. 16 shows the compressor 101 during the multistage operation, that is, the freezing operation and the freezing and refrigerating operation, and FIG. 17 shows the compressor 101 during the single-stage operation, that is, the refrigerating operation.

The compressor 101 is different from the compressor 1 of Embodiment 5 in that: a magnet 151 and an electromagnet 175 are not disposed in a first-stage compressing section 1A; a vane 150 abuts on a roller 146 via a spring 174 in the same manner as in a second-stage compressing section 1B; a rotation shaft 116 is divided into two between a first eccentric section 142 and a second eccentric section 144; and two divided rotation shafts 116, that is, a first rotation shaft 116A and a second rotation shaft 116B are connected to each other via a gear portion 117 disposed between the first eccentric section 142 and the second eccentric section 144.

It is to be noted that a magnet 119 is attached to an end portion of the second rotation shaft 116B on the side opposite to the gear portion 117, and an electromagnet 177 is disposed in the vicinity of a bottom portion of a sealed container 112 facing this magnet 119.

Moreover, during the freezing operation and the freezing and refrigerating operation, a control unit 26 executes a control so that the electromagnet 177 is not energized or the electromagnet 177 is energized so as to react against the magnet 119. Accordingly, as shown in FIG. 16, the first and second rotation shafts 116A and 116B are connected to each other via the gear portion 117. When the compressor 101 is operated, the rotation shafts 116A, 116B rotate together, and the compressor 101 is operated in multiple stages.

On the other hand, when the control unit 26 energizes the electromagnet 177 so as to attract the magnet 119 during the refrigerating operation. the second rotation shaft 116B is attracted together with the magnet 119 by the electromagnet 177, and the first rotation shaft 116A is detached from the second rotation shaft 116B via the gear portion 117. Accordingly, in this case, even when the compressor 101 is operated, a rotary force from an electromotive element 114 is not transmitted to the second rotation shaft 116B, and the compressor 101 is operated in a single stage of a second-stage compressing section 101B only.

As described above in detail, in the refrigerating device 70 of the present embodiment, the rotation shaft of the compressor 101 is constituted of the first and second rotation shafts 116A, 116B, and there are arranged the gear portion 117, the magnet 119, and the electromagnet 177 which function as a clutch mechanism. Accordingly, even when the compressor 101 as the multistage compressor is used, it is possible to stop the compressing operation of a first-stage compressing section 1A which is a front-stage compression element, energy saving can be inhibited, and a high-efficiency refrigerating operation is possible.

Moreover, in the present embodiment, the compressor can be constituted of one unit in the same manner as in Embodiment 5, and space of the refrigerating device 70 can be saved.

It is to be noted that needless to say, even the refrigerating device 70 is applicable to a refrigerator in the same manner as in the above-described embodiments.

The present invention has been described above in accordance with the embodiment, but the present invention is not limited to the embodiment, and various modifications are possible. For example, a carbon dioxide refrigerant is introduced into a refrigerant circuit in the above-described embodiment, but the present invention is not limited to the embodiment, and is applicable to another embodiment in which a chlorofluorocarbon-based refrigerant is introduced.

Moreover, the expansion valves 65 and 66 of the above-described embodiments may be changed to capillary tubes if necessary.

### (Embodiment 7)

Next, Embodiment 7 of the present invention will be described in detail with reference to the drawings. FIG. 18 shows a refrigerant circuit diagram of a refrigerating device in one embodiment of the present invention. In the present embodiment, there are provided a refrigerating device capable of inhibiting a drying agent from being crushed even in a case where a refrigerant such as carbon dioxide is used, a refrigerator, and a gas-liquid separator disposed in a refrigerating cycle. The present embodiment will be described hereinafter in detail with reference to the drawings.

A refrigerating device 30 includes: a compressor 1; a radiator 2 connected to a discharge side of this compressor 1; a third capillary tube 31 connected to an outlet side of this radiator 2; a gas-liquid separator 4 connected to the outlet side of this third capillary tube 31; heat absorbing means 8 in which a liquid refrigerant separated by this gas-liquid separator circulates; and a first heat exchanger 15 constituted so as to exchange heat between a refrigerant discharged from the heat absorbing means 8 and a refrigerant in the vicinity of the third capillary tube 31. A refrigerant introducing tube 6 through which a gas refrigerant separated by the gas-liquid separator 4 flows is connected to an intermediate-pressure portion of the compressor 1, and an outlet side of the first heat exchanger 15 is connected to a suction port of the compressor 1 to constitute a refrigerating cycle.

Moreover, a check valve 7 is disposed in the refrigerant introducing tube 6 between the gas-liquid separator 4 and the intermediate-pressure portion of the compressor 1, and a check valve 53 is disposed between the first heat exchanger 15 and the suction port of the compressor 1.

The heat absorbing means 8 includes: a three-way valve 91; a first capillary tube 12; a second capillary tube 13 which is disposed in parallel with this first capillary tube 12 and whose resistance value is larger than that of the first capillary tube 12; and a heat sink 14 disposed after a junction 9A at which refrigerant pipes from these first and second capillary tubes 12, 13 are combined. This heat absorbing means 8 selectively functions in different temperature zones. When the three-way valve 91 is switched to pass the liquid refrigerant discharged from the gas-liquid separator 4 through the side of the first capillary tube 12, a flow rate of the refrigerant flowing through the heat sink 14 increases, and a refrigerating operation is performed.

On the other hand, when the three-way valve 91 is switched to pass the refrigerant on the side of the second capillary tube 13, the flow rate of the refrigerant flowing through the heat sink 14 lowers, and a freezing operation is performed.

It is to be noted that the refrigerating operation and the freezing operation may be switched by a method of changing the number of revolutions of the compressor 1 to control the flow rate of the refrigerant flowing through the heat sink 14 in addition to the method of switching the first and second capillary tubes 12, 13 as described above. These methods may be combined to realize the switching of the operation.

Furthermore, the refrigerating device 30 is provided with selection means 23 for feeding cold air generated by the heat sink 14 by means of a fan (not shown) to selectively guide cold air to a plurality of rooms (refrigerating room 21, freezing room 22) which are controlled in different temperature zones.

This selection means 23 includes an air feed duct 24 and a changeover damper 25, a duct 57A is disposed between this changeover damper 25 and the refrigerating room 21, and a duct 58A is disposed between the changeover damper and the freezing room 22. The changeover damper 25 is connected to a control unit 26. This control unit 26 is connected to the above-described three-way valve 91. For example, during the freezing operation, the three-way valve 91 is switched to a second capillary tube 13 side, the changeover damper 25 is switched so as to allow air to flow through the duct 58A, and cold air is introduced into the freezing room 22. During the refrigerating operation, the three-way valve 91 is switched to a first capillary tube 12 side, the changeover damper 25 is switched so as to allow cold air to flow through the duct 57A, and cold air is introduced into the refrigerating room 21.

The compressor 1 is a two-stage compressor including a first-stage compressing section 1A and a second-stage compressing section 1B in a sealed container. An intermediate cooling unit 1C is disposed in a refrigerant pipe connecting the first-stage compressing section 1A to the second-stage compressing section 1B outside the sealed container.

Moreover, as described above, the refrigerant introducing tube 6 is connected in such a manner that the gas refrigerant discharged from the gas-liquid separator 4 can be introduced into the intermediate-pressure portion of the compressor 1, that is, between the intermediate cooling unit 1C and the second-stage compressing section 1B. It is to be noted that the separated gas refrigerant is introduced into the intermediate-pressure portion of the compressor 1 owing to a difference pressure in the refrigerant introducing tube 6 as shown by a broken-line arrow. It is to be noted that this compressor 1 is not limited to the two-stage compressor. For example, in a single-stage compressor, the refrigerant introducing tube 6 may be returned to the intermediate-pressure portion of the single-stage compressor. Alternatively, a plurality of compressors may be connected.

Here, the gas-liquid separator 4 will be described with reference to FIG. 19. FIG. 19 is a schematic sectional view of the gas-liquid separator 4.

The gas-liquid separator 4 includes: a container 80 constituted of a substantially columnar hollow member; a first adsorbing section 81A; support members 81B, 81C which are disposed under and on the first adsorbing section 81A and which fix the first adsorbing section 81A in the container 80; a second adsorbing section 82A; and support members 82B, 82C which are disposed under and on this second adsorbing section 82A and which fix the adsorbing section 82A in the container 80. Moreover, the side face of the container 80 is connected to a refrigerant pipe 4A for introducing the refrigerant discharged from the radiator 2 and having a gas and liquid mixed state, and the top of the container is connected to the refrigerant introducing tube 6 via which there flows the gas refrigerant separated by the gas-liquid separator 4 and which is connected to the intermediate-pressure portion of the compressor 1. The bottom of the container is connected to a refrigerant pipe 4B via which there flows the liquid refrigerant separated by the gas-liquid separator 4 and which is connected to the three-way valve 91. It is to be noted that the separated liquid refrigerant is stored from a lower portion of the container 80 toward the refrigerant pipe 4B.

The first and second adsorbing sections 81A, 82A adsorb and remove a water content mixed in the refrigerant, and are filled with a so-called drying agent such as activated alumina, zeolite, or molecular sieve. The support members 81B, 81C, 82B, and 82C may be constituted of any material that can prevent outflow from the adsorbing sections 81A, 82A and that can allow the refrigerant to circulate. For example, a metal mesh, a resin mesh or the like is used.

Furthermore, in the refrigerating device 30 of the present embodiment, as the refrigerant, there is used a carbon dioxide refrigerant (CO₂) which is a natural refrigerant having a small environmental load in consideration of flammability, toxicity and the like. As oil which is a lubricant of the compressor 1, there is used, for example, mineral oil, alkyl benzene oil, ether oil, ester oil, polyalkylene glycol (PAG), polyol ester (POE) or the like.

Since carbon dioxide is used as the refrigerant in the refrigerating device 30 in this manner, a high pressure part of the refrigerating cycle is brought into a supercritical state in a case where an outside air temperature is not less than a critical temperature (about +31°C) of carbon dioxide. Accordingly, the refrigerating device 30 is operated as a transfer critical cycle.

It is to be noted that in the present embodiment, in FIG. 18, the high pressure part of the refrigerating cycle of the refrigerating device 30 is operated which corresponds to a part from the discharge side of the second-stage compressing section 1B to an inlet to the third capillary tube 31 via the radiator 2. An intermediate-pressure part of the refrigerating cycle of the refrigerating device 30 is operated which corresponds to a part from the discharge side of the first-stage compressing section 1A to the suction port of the second-stage compressing section 1B via the intermediate cooling unit 1C, and the outlet of the third capillary tube 31 to the suction port of the second-stage compressing section 1B via the gas-liquid separator 4 and to the three-way valve 91. Moreover, a low-pressure part of the refrigerating cycle of the refrigerating device 30 is operated which corresponds to a part from the outlet of the three-way valve 91 to the suction port of the first-stage compressing section 1A via the heat absorbing means 8 and the first heat exchanger 15.

There will be described an operation of the refrigerating device 30 of the present embodiment constituted as described above with reference to FIGS. 18 and 19. In the refrigerating device 30, there are selected as required a freezing operation mainly using the second capillary tube 13, and a refrigerating operation mainly using the first capillary tube 12.

First, the freezing operation will be described. It is to be noted that this freezing operation is an operation allowing the heat sink 14 to function at a predetermined temperature (e.g., around -26°C) and cool the freezing room 22.

In the present embodiment, when the compressor 1 is operated, the refrigerant discharged from the compressor 1 radiates heat in the radiator 2, and is cooled. Thereafter, the refrigerant discharged from the radiator 2 reaches the third capillary tube 31. Here, a pressure of the refrigerant is reduced to obtain a gas and liquid mixed state (two-phase mixture of gas and liquid). The refrigerant is introduced from the refrigerant pipe 4A of the gas-liquid separator 4 into the container 80 of the gas-liquid separator 4. The refrigerant in this container 80 is separated into a gas refrigerant and a liquid refrigerant. As shown by a broken-line arrow in FIG. 19, the gas refrigerant passes through the second adsorbing section 82A, circulates in the check valve 7, and passes through the check valve 7. Thereafter, the refrigerant is introduced into the intermediate-pressure portion of the compressor 1. On the other hand, the liquid refrigerant separated in the gas-liquid separator 4 passes through the first adsorbing section 81A, flows through the refrigerant pipe 4B, and reaches the heat absorbing means 8 as shown by a one-dot chain-line arrow in FIG. 19.

It is to be noted that the refrigerating device 30 is constituted so as to perform two-stage expansion by means of the third capillary tube 31 and the first or second capillary tube 12, 13. Therefore, the intermediate-pressure part of the present refrigerating cycle includes: a part between the outlet side of the third capillary tube 31 and the inlet side of the first and second capillary tubes 12, 13; a part between the discharge side of the first-stage compressing section 1A of the compressor 1 and the suction side of the second-stage compressing section 1B; and a part in the refrigerant introducing tube 6.

Moreover, the liquid refrigerant is circulated on the second capillary tube 13 side by means of the three-way valve 91 of the heat absorbing means 8. The liquid refrigerant evaporates in the heat sink 14 to absorb heat from a surrounding area. Thereafter, the refrigerant exchanges heat with the refrigerant in the vicinity of the third capillary tube 31 in the first heat exchanger 15, and the refrigerant is warmed and returned to the suction port of the compressor 1. It is to be noted that since the changeover damper 25 is switched so as to circulate cold air on the duct 58A side by the control unit 26 during the freezing operation, the freezing room 22 is cooled.

Next, the refrigerating operation will be described. It is to be noted that this refrigerating operation is an operation which allows the heat sink 14 to function at a temperature (e.g., around -5°C) higher than that during the freezing operation and which cools the refrigerating room 21 in a concentrated manner.

During the refrigerating operation, a selected temperature zone in the heat absorbing means 8 differs from that during the freezing operation. That is, after the liquid refrigerant discharged from the gas-liquid separator 4 is circulated on the first capillary tube 12 side by means of the three-way valve 91 of the heat absorbing means 8, the refrigerant evaporates in the heat sink 14 to absorb heat from the surrounding area. It is to be noted that since the changeover damper 25 is switched so as to circulate cold air on the duct 57A side by the control unit 26 during the present refrigerating operation, the refrigerating room 21 is cooled. In the refrigerating device 30 of the present embodiment, the above-described refrigerating cycle is formed during both of the freezing operation and the refrigerating operation.

It is to be noted that in the refrigerating device 30, the gas refrigerant separated by the gas-liquid separator 4 cannot be used in the cooling, even if the refrigerant is circulated in the heat absorbing means 8. When the refrigerant is returned to the suction port of the first-stage compressing section 1A, a compression efficiency in the compressor 1 is lowered.

To solve the problem, in the present embodiment, the gas refrigerant separated by the gas-liquid separator 4 is introduced into the intermediate-pressure portion of the compressor 1, that is, between the intermediate cooling unit 1C and the second-stage compressing section 1B. Therefore, a compression efficiency in the compressor 1 can be improved. Especially in the present embodiment, since the carbon dioxide refrigerant is introduced in the refrigerant circuit, a gas content is larger than a content of a chlorofluorocarbon-based refrigerant or the like in a ratio of the gas and the liquid separated by the gas-liquid separator 4. Since the large gas content is introduced into the intermediate-pressure portion of the compressor 1, the efficiency can further be enhanced.

Furthermore, in the present embodiment, there are arranged the first and second adsorbing sections 81A, 82A as driers in the container 80 of the gas-liquid separator 4 as described above. Accordingly, the gas-liquid separator 4 is structured as a drier integral type. Therefore, unlike a conventional art, without separately disposing any drier in the refrigerating cycle, the water content in the refrigerant can be adsorbed and removed in the gas-liquid separator 4, and the inside of the pipe can be prevented from being frozen. The number of components can be reduced, and costs can be reduced.

Moreover, carbon dioxide is used as the refrigerant in the refrigerating device 30. When carbon dioxide is used as the refrigerant in this manner, the high-pressure side of the refrigerating cycle, that is, a part between the discharge side of the compressor 1 and the inlet side of the third capillary tube 31 has a much higher pressure as compared with the use of a hydrofluorocarbon (HFC) refrigerant or a hydrocarbon (HC) refrigerant as in a conventional art. In a case where the drier is disposed in this high-pressure part, a pressure resistant performance is demanded, but in the present embodiment, since the drier integral type gas-liquid separator 4 is disposed in the intermediate-pressure part, the pressure resistant performance of the container 80 can be inhibited, and the drying agent (adsorbing section) can be prevented from being crushed owing to the high-temperature high-pressure refrigerant. Moreover, since the gas refrigerant or the liquid refrigerant passes through the first and second adsorbing sections 81A, 82A of the gas-liquid separator 4 in the refrigerating device 30, a liquid face of a liquid reservoir portion in the gas-liquid separator 4 is easily stabilized by a rectifying function in these adsorbing sections.

It is to be noted that the gas-liquid separator 4 has been described above as a gas-liquid separator with reference to FIG. 19, but structures shown in FIGS. 20 and 21 are applicable.

FIG. 20 is a schematic sectional view of a gasliquid separator 4-2 having another structure. This gasliquid separator is different from the gas-liquid separator 4 in that the second adsorbing section 82A and the support members 82B, 82C are not disposed. FIG. 21 is a schematic sectional view of a gas-liquid separator 4-3 having still another structure. This gas-liquid separator is different from the gas-liquid separator 4 in that the first adsorbing section 81A and the support members 81B, 81C are not disposed. In these gas-liquid separators 4-2, 4-3, cost reduction is possible as compared with the gas-liquid separator 4, and needless to say, the separators become valid depending on use states and use conditions.

Next, there will be described an example in which the refrigerating device 30 of the present embodiment is applied to a refrigerator with reference to FIG. 22. FIG. 22 shows a schematic constitution diagram of the refrigerator provided with the refrigerating device 30.

This refrigerator 40 is constituted of: a refrigerating room 41 disposed in an upper stage; and a freezing room 42 disposed in a lower stage. Moreover, a refrigerator partition wall 43 is disposed in an inner part of the respective room 42, and the heat sink 14 is disposed in an air path 44 defined by the refrigerator partition wall 43. A first changeover damper 45 is disposed in an inlet A to the air path 44, and the first changeover damper 45 is switched between a position (broken-line position) to close the inlet A of the air paths 44 and an open position (solid-line position). A rear-side air path 46 is formed in a rear wall 47 of the refrigerator 40. When the first changeover damper 45 is switched to the broken-line position, the inlet A of the air path 44 communicates with the refrigerating room 41 via the rear-side air path 46. An outlet B of the air path 44 is provided with a fan 48 and a second changeover damper 49. The second changeover damper 49 is switched between a position (broken-line position) to close the outlet B of the air paths 44 and an open position (solid-line position). In this solid-line position, the second changeover damper 49 closes an opening 51 of an intermediate partition wall 50.

According to the above-described constitution, during the freezing operation, the first changeover damper 45 is switched to the position (solid-line position) to open the inlet A to the air path 44, and the second changeover damper 49 is switched to the position (solid-line position) to open the outlet B of the air path 44, so that air is circulated in the freezing room 42, and cooled by the heat sink 14. During the refrigerating operation, the first changeover damper 45 is switched to the position (broken-line position) to close the inlet A to the air path 44, and the second changeover damper 49 is switched to the position (broken-line position) to close the outlet B of the air path 44, so that air is circulated in the refrigerating room 41 via the rear-side air path 46, and cooled by the heat sink 14.

### (Embodiment 8)

Next, another embodiment of the present invention will be described with reference to FIG. 23. FIG. 23 shows a refrigerant circuit diagram of a refrigerating device 50 in this case. In the present embodiment, components denoted with the same reference numerals as those of Embodiment 7 produce the same or similar functions or effects. The present embodiment is different from Embodiment 7 in that an outlet side of a three-way valve 91 is provided with first heat absorbing means 10 and second heat absorbing means 11 disposed in parallel with the first heat absorbing means instead of heat absorbing means 8.

The first heat absorbing means 10 includes: a first capillary tube 12; and a first heat sink 57 disposed in series to this first capillary tube 12. The second heat absorbing means 11 includes: a second capillary tube 13; a second heat sink 58 disposed in series to the second capillary tube 13; and a check valve 52. Moreover, after refrigerant pipes on an outlet side of the first and second heat absorbing means 10, 11 are combined at a junction 9B, the pipe is connected to a suction port of a compressor 1 via a first heat exchanger 15 and a check valve 53 in the same manner as in the refrigerating device 30 of Embodiment 7. The first heat absorbing means 10 and the second heat absorbing means 11 function in mutually selectively different temperature zones.

As described above, since the refrigerating device 50 of the present embodiment is provided with the first and second heat absorbing means 10, 11, a refrigerating room 21 and a freezing room 22 can be selectively cooled via ducts 57A, 58A in heat sinks 57, 58. The heat sink suitable for the temperature is usable in the freezing operation and the refrigerating operation having different temperature zones, and improvements of operation efficiencies of the operations can be expected.

Next, there will be described an example in which the refrigerating device 50 of the present embodiment is applied to a refrigerator with reference to FIG. 24.

FIG. 24 shows a schematic constitution diagram of the refrigerator provided with the refrigerating device 50 of the present embodiment. This refrigerator 40 is constituted of: a refrigerating room 41 disposed in an upper stage; and a freezing room 42 disposed in a lower stage. Moreover, refrigerator partition walls 61, 62 are disposed in inner parts of the respective rooms 41, 42, and the heat sinks 57, 58 and fans 63, 64 are disposed in air paths 44 defined by the refrigerator partition walls 61, 62. In the present constitution, when a thermostat turns on or off in the refrigerating operation and the freezing operation, the first heat absorbing means 10 and the second heat absorbing means 11 are switched to allow the refrigerant to flow through one of the heat sinks 57, 58, and the corresponding fan 63 or 64 is driven. When the refrigerant flows through the heat sink 57, cold air is supplied to the refrigerating room 41. When the refrigerant flows through the heat sink 58, cold air is supplied to the freezing room 42.

As described above, since the refrigerator 40 of the present embodiment is provided with the above-described refrigerating device 50, a high cooling performance and a high-efficiency operation are possible.

### (Embodiment 9)

Next, still another embodiment of the present invention will be described with reference to FIG. 25. FIG. 25 shows a refrigerant circuit diagram of a refrigerating device 70 in this case. It is to be noted that in FIG. 25, components denoted with the same reference numerals as those of Embodiment 1 produce the same or similar functions or effects. The refrigerating device 70 of the present embodiment is different from Embodiment 8 in that third and fourth heat absorbing means 10B, 11B are disposed instead of the first and second heat absorbing means 10, 11.

The third heat absorbing means 10B includes: a first capillary tube 12 in which a refrigerant from a branch point 9C circulates; a first expansion valve 65 disposed in series to the first capillary tube 12; a heat sink 57 for refrigerating; and a first heat exchanger 17 disposed so as to exchange heat between a refrigerant discharged from the heat sink 57 and a refrigerant in the vicinity of the first capillary tube 12. The fourth heat absorbing means 11B is disposed in parallel with the third heat absorbing means 10B, and includes: a pressure reducing unit 3; a gas-liquid separator 4; a second capillary tube 13 in which the refrigerant from the gas-liquid separator 4 circulates; a second expansion valve 66 disposed in series to the second capillary tube 13; a heat sink 58 for freezing; and a second heat exchanger 18 disposed so as to exchange heat between the refrigerant discharged from this heat sink 58 and the refrigerant in the vicinity of the second capillary tube 13. Moreover, a check valve 52 is disposed between the outlet side of the heat sink 58 and the second heat exchanger 18.

Moreover, the third heat absorbing means 10B and the fourth heat absorbing means 11B function in mutually selectively different temperature zones. A refrigerant pipe from a radiator 2 is branched at the branch point 9C. One pipe is disposed as the third heat absorbing means 10B, the other pipe is disposed as the fourth heat absorbing means 11B, the pipes are disposed in parallel with each other, but the pipes are combined again at a junction 9D disposed before a suction port of a compressor 1.

Here, the pressure reducing unit 3 is constituted in such a manner that a throttle degree is variable. This throttle degree is changed to lower a refrigerant pressure to a predetermined pressure before the refrigerant reaches the gas-liquid separator 4, and the refrigerant is introduced into the gas-liquid separator 4. Therefore, it is possible to control a ratio of gas and liquid in the gas-liquid separator 4. It is to be noted that the first expansion valve 65 and the second expansion valve 66 are constituted so that the throttle degree is variable in the same manner as in the pressure reducing unit 3.

Moreover, the third and fourth heat absorbing means 10B, 11B are provided with the above-described constitutions. Therefore, in a case where, for example, the pressure reducing unit 3 is totally closed, and the first expansion valve 65 is opened, the refrigerant circulates on the side of the first capillary tube 12, that is, the third heat absorbing means 10B only. Conversely, when the first expansion valve 65 is totally closed, and the pressure reducing unit 3 and the second expansion valve 66 are opened, the refrigerant circulates on the side of the second capillary tube, that is, the fourth heat absorbing means 11B only.

Here, the refrigerant passed through the heat sink 57 flows via the first heat exchanger 17 disposed in the vicinity of the first capillary tube 12, and exchanges heat with the refrigerant in the vicinity of the first capillary tube 12 in this first heat exchanger 17. Thereafter, the refrigerant is returned to the suction port of the compressor 1. The refrigerant discharged from the heat sink 58 passes through the check valve 52 and the second heat exchanger 18 disposed in the vicinity of the second capillary tube 13. After the refrigerant exchanges heat with the refrigerant in the vicinity of the second capillary tube 13 in the second heat exchanger 18, the refrigerant is returned to the suction port of the compressor 1.

Even in the present embodiment, even when the gas refrigerant separated by the gas-liquid separator 4 is circulated in fourth heat absorbing means 11B such as the second capillary tube 13, the refrigerant cannot be used during the cooling. When the refrigerant is returned to the suction port of a first-stage compressing section 1A, a compression efficiency in the compressor 1 is deteriorated. To solve the problem, when the gas refrigerant separated by the gas-liquid separator 4 is introduced into the intermediate-pressure portion of the compressor 1, that is, between an intermediate cooling unit 1C and a second-stage compressing section 1B, the compression efficiency in the compressor 1 can be improved.

Here, since the refrigerating device 70 is constituted so as to circulate the refrigerant in the third heat absorbing means 10B during the refrigerating operation, it is not possible to utilize a function of a refrigerant introducing tube 6 of introducing the gas refrigerant separated by the gas-liquid separator 4 into the intermediate-pressure portion of the compressor 1. However, since during the refrigerating operation, an amount of the gas refrigerant generated in the gas-liquid separator 4 is smaller than that during the freezing operation, a drop width of the operation efficiency is inhibited even if the operations of the pressure reducing unit 3, the refrigerant introducing tube 6 and the like are stopped.

The refrigerating device 70 of the present embodiment is applicable to a refrigerator in the same manner as in the refrigerating device 50 of Embodiment 8.

### (Embodiment 10)

Embodiment 10 of the present invention will be described with reference to FIG. 26. FIG. 26 shows a refrigerant circuit diagram of a refrigerating device 90 in the present embodiment. It is to be noted that in FIG. 26, components denoted with the same reference numerals as those of the above-described embodiments produce the same or similar functions or effects. The refrigerating device 90 of the present embodiment is different from Embodiment 8 in that a drier 95 is disposed in a refrigerant pipe 4A between an outlet side of a third capillary tube 31 and an inlet side of a gas-liquid separator 4.

The drier 95 includes an adsorbing section as means for removing a water content from a refrigerating cycle in a container formed into a substantially columnar hollow member. In this adsorbing section, activated alumina, zeolite, molecular sieve or the like is used as a drying agent to be introduced into the gas-liquid separator 4.

As described above, since the refrigerating device 90 is provided with the drier 95, a gas-liquid separator 4-4 structured as shown in FIG. 27 is applicable as the gasliquid separator 4.

FIG. 27 is a schematic sectional view of the gasliquid separator 4-4. This gas-liquid separator 4-4 is different from the above-described gas-liquid separators 4, 4-1, 4-2, and 4-3 in that any adsorbing section is not disposed in a sealed container 80. This can reduce costs of the gas-liquid separator.

As described above, according to the present embodiment, carbon dioxide is used as the refrigerant. Therefore, a high-pressure part of a compression refrigerating cycle has a much higher pressure as compared with the use of a hydrofluorocarbon (HFC) refrigerant or a hydrocarbon (HC) refrigerant as in a conventional art. However, since the refrigerating device 90 of the present embodiment is provided with the third capillary tube 31 to form a two-stage expansion cycle, and the drier 95 is disposed in an intermediate-pressure part of the refrigerating cycle, the drying agent can be prevented from being crushed owing to the high-temperature high-pressure refrigerant, and a water content can be removed from the refrigerant.

It is to be noted that in the refrigerating device 90 of the present embodiment, the gas-liquid separators 4, 4-1, 4-2, and 4-3 are applicable instead of the gas-liquid separator 4-4. In this case, there is a problem of cost increase or the like, but, needless to say, a capability of removing the water content in the refrigerating cycle is improved, and the gas-liquid separator becomes valid depending on use states or use conditions of the refrigerating device 90.

Moreover, the refrigerating device 90 of the present embodiment is applicable to a refrigerator in the same manner as in the above-described embodiments,

The present invention has been described above in accordance with the embodiment, but the present invention is not limited to the embodiment, and various modifications are possible. For example, a carbon dioxide refrigerant is introduced into a refrigerant circuit in the above-described embodiment, but the present invention is not limited to the embodiment, and is applicable to another embodiment in which a chlorofluorocarbon-based refrigerant is introduced.

Moreover, in the above-described embodiments, if necessary, the capillary tube may be replaced with the expansion valve, and the expansion valve may be replaced with the capillary tube.

## Claims

1. A refrigerating device comprising: a compressor having an intermediate-pressure portion; and a radiator connected to a discharge side of the compressor,
the radiator including a refrigerant pipe which is branched on an outlet side of the radiator, one of the branched refrigerant pipes being provided with first heat absorbing means including first pressure reducing means and a first heat sink, the other branched refrigerant pipe being provided with second heat absorbing means including second pressure reducing means and a second heat sink,
wherein the one refrigerant pipe is connected to the intermediate-pressure portion of the compressor, and the other refrigerant pipe is connected to a suction portion of the compressor on a low-pressure side of the intermediate-pressure portion.

2. The refrigerating device according to claim 1, further comprising:
a heat exchanger via which heat is exchangeable between a refrigerant discharged from the first heat sink and a refrigerant which is discharged from the radiator and which is to be branched.

3. The refrigerating device according to claim 1 or 2, wherein the first heat absorbing means and the second heat absorbing means function in different temperature zones.

4. The refrigerating device according to claim 3,
wherein the second heat absorbing means functions in a temperature zone which is lower than that of the first heat absorbing means.

5. A refrigerator comprising:
the refrigerating device according to claims 1 to 4.

6. The refrigerator according to claim 5 further comprising:
a refrigerating room; and
a freezing room operated at a temperature which is lower than that of the refrigerating room,
the refrigerating room being cooled by the first heat absorbing means, the freezing room being cooled by the second heat absorbing means.

7. The refrigerating device according to claims 1 to 4, and the refrigerator according to claim 5 or 6,
wherein carbon dioxide is used as a refrigerant.

8. A compressor comprising:
an electromotive element; and
a compression chamber which is driven by the electromotive element to compress a fluid,
the electromotive element and the compression chamber being disposed in a sealed container,
wherein the compression chamber includes: an introducing port for introducing the fluid into the compression chamber; and first and second discharge ports for discharging the compressed fluid,
the first discharge port is provided with a first discharge valve which is opened in a case where the fluid compressed in the compression chamber reaches a first pressure, and
the second discharge port is provided with a second discharge valve which is opened at a second pressure which is higher than the first pressure.

9. The compressor according to claim 8, wherein the fluid is an oil-containing refrigerant.

10. The compressor according to any one of claims 8 and 9, wherein the compression element is constituted of: a front-stage compression element; and a rear-stage compression element which further compresses the refrigerant compressed by the front-stage compression element,
the compression chamber of the front-stage compression element is provided with the introducing port, the first discharge port, the first discharge valve, the second discharge port, and the second discharge valve, and
the second discharge valve is opened at a pressure which is higher than that of the refrigerant discharged from the rear-stage compression element.

11. The compressor according to claim 10, wherein the second discharge valve is brought into contact with the refrigerant in the compression chamber and the refrigerant discharged from the rear-stage compression element.

12. A refrigerating device comprising:
the compressor according to claim 8;
a radiator connected to a discharge side of the compressor;
first heat absorbing means connected to one of branched refrigerant pipes on an outlet side of the radiator and including first pressure reducing means and a first heat sink; and
second heat absorbing means connected to the other branched refrigerant pipe and including second pressure reducing means and a second heat sink,
the one refrigerant pipe being connected to an intermediate-pressure portion of the compressor, the other refrigerant pipe being connected to a suction port of the compressor on a low-pressure side of the intermediate-pressure portion.

13. The refrigerating device according to claim 12, wherein a high-pressure side of a refrigerating cycle is operated in a supercritical state.

14. A refrigerator comprising:
the refrigerating device according to any one of claims 12 and 13.

15. A refrigerating device comprising:
compression means including a front-stage compression element and a rear-stage compression element;
a radiator connected to a discharge side of the compression means;
first heat absorbing means connected to one of branched refrigerant pipes on an outlet side of the radiator and including first pressure reducing means and a first heat sink;
second heat absorbing means connected to the other branched refrigerant pipe and including second pressure reducing means and a second heat sink;
changeover means for selecting circulation of a refrigerant to the first heat absorbing means and the second heat absorbing means; and
control means for controlling a compressing operation of the compression means based on information of the changeover means,
the refrigerant pipe on the outlet side of the first heat absorbing means being connected between the discharge side of the front-stage compression element and a suction port of the rear-stage compression element, the refrigerant pipe on the outlet side of the second heat absorbing means being connected to a suction port of the front-stage compression element,
the control means stopping the compressing operation of the front-stage compression element in a case where the refrigerant is circulated in the first heat absorbing means and the circulation of the refrigerant to the second heat absorbing means is interrupted.

16. The refrigerating device according to claim 15, wherein the compression means is constituted of two compressors, one of the two compressors is operated as the front-stage compression element, the other compressor is operated as the rear-stage compression element, and
the control means stops the operation of the one compressor in a case where the refrigerant is circulated in the first heat absorbing means and the circulation of the refrigerant to the second heat absorbing means is interrupted.

17. The refrigerating device according to claim 15, wherein the compression means contains the front-stage compression element and the rear-stage compression element in one sealed container, each of the compression elements is constituted of a rotary multistage compressor including a vane and a roller and operating via the same rotation shaft,
the multistage compressor includes contact prevention means for preventing the vane of the front-stage compression element from being brought into contact with the roller, and
the control means operates the contact prevention means to prevent the vane of the front-stage compression element from being brought into contact with the roller in a case where the refrigerant is circulated in the first heat absorbing means and the circulation of the refrigerant to the second heat absorbing means is interrupted.

18. The refrigerating device according to claim 15, wherein the compression means contains the front-stage compression element and the rear-stage compression element in one sealed container,
the front-stage compression element operates via a first rotation shaft, the rear-stage compression element operates via a second rotation shaft,
the first rotation shaft is attached to driving means, the first rotation shaft is connected to the second rotation shaft via a clutch mechanism, and
the control means disconnects the second rotation shaft from the first rotation shaft via the clutch mechanism in a case where the refrigerant is circulated in the first heat absorbing means and the circulation of the refrigerant to the second heat absorbing means is interrupted.

19. The refrigerating device according to any one of claims 15 to 18, wherein carbon dioxide is used as the refrigerant.

20. The refrigerating device according to any one of claims 15 to 19, wherein a high-pressure side of a refrigerating cycle is operated in a supercritical state.

21. A refrigerator comprising:
the refrigerating device according to any one of claims 15 to 20.

22. A compressor comprising:
a vane;
a roller; and
contact prevention means for preventing the vane from being brought into contact with the roller.

23. The compressor according to claim 22, wherein the contact prevention means includes: a magnet attached to the vane; and an electromagnet capable of generating a magnetic force which reacts against the magnet or which attracts the magnet.

24. The compressor according to claim 23, wherein the magnetic force is generated so that the electromagnet reacts against the magnet in a case where a refrigerant compressing operation is performed, and the magnetic force is generated so that the electromagnet attracts the magnet in a case where the refrigerant compressing operation is stopped.

25. A compressor containing a front-stage compression element and a rear-stage compression element in one sealed container,
the front-stage compression element operating via a first rotation shaft, the rear-stage compression element operating via a second rotation shaft,
the first rotation shaft being attached to driving means, the first rotation shaft being connected to the second rotation shaft via a clutch mechanism.

26. The compressor according to claim 25, wherein the clutch mechanism disconnects the second rotation shaft from the first rotation shaft in a case where a compressing operation of the front-stage compression element is stopped, and a compressing operation of the rear-stage compression element is performed.

27. A refrigerating device comprising a refrigerating cycle including: a compressor; a radiator connected to a discharge side of the compressor; first pressure reducing means connected to an outlet side of the radiator; second pressure reducing means disposed in series to the first pressure reducing means; and a heat sink connected to an outlet side of the second pressure reducing means,
wherein adsorbing means for adsorbing a water content from a refrigerant is disposed between the outlet side of the first pressure reducing means and an inlet side of the second pressure reducing means.

28. A gas-liquid separator comprising:
a container into which a mixed refrigerant of a gas and a liquid is introduced and in which the refrigerant is separated into the gas and the liquid;
an introducing tube for introducing the refrigerant into the container;
a first outlet tube out of which the gas refrigerant separated in the container flows; and
a second outlet tube out of which the liquid refrigerant separated in the container flows,
the container being provided with an adsorbing section for adsorbing a water content from the refrigerant.

29. A refrigerating device comprising a refrigerating cycle including: a compressor; a radiator connected to a discharge side of the compressor; first pressure reducing means connected to an outlet side of the radiator; second pressure reducing means disposed in series to the first pressure reducing means; and a heat sink connected to an outlet side of the second pressure reducing means,
wherein the gas-liquid separator according to claim 28 is disposed between an outlet side of the first pressure reducing means and an inlet side of the second pressure reducing means.

30. The refrigerating device according to claim 29, wherein the compressor has an intermediate-pressure portion, and
the first outlet tube of the gas-liquid separator is connected to the intermediate-pressure portion.

31. The refrigerating device according to any one of claims 27, 29, and 30, wherein a high-pressure part of the refrigerating cycle is operated at a supercritical pressure.

32. The refrigerating device according to any one of claims 27, 29, 30, and 31, wherein carbon dioxide is used as the refrigerant.

33. A refrigerator comprising:
the refrigerating device according to any one of claims 27, 29, 30, 31, and 32.
